# EUROPÄISCHE PATENTANMELDUNG

(11) **EP 3 530 613 A1**
(43) Veröffentlichungstag der Anmeldung: **28.08.2019**
(21) Anmeldenummer: 17020323.6
(22) Anmeldetag: 29.07.2017
(51) Int. Cl.: C01B 17/20, C01B 35/14, H01B 1/10

(54) **DIE HERSTELLUNG UND VERWENDUNG VON KOLLOIDALEM BOROSULFID**

(71) Anmelder: Jodlauk, Jörg, 66606 St. Wendel (DE); Triem, Albert, 66606 St. Wendel (DE)
(72) Erfinder: Jodlauk, Jörg, 66606 St. Wendel (DE); Triem, Albert, 66606 St. Wendel (DE)

(57) **Zusammenfassung**

Die Erfindung betrifft pulverförmig vorliegendes hableitendes Kationborosulfid mit einer geringen Korngröße und einer geringen Wasserlöslichkeit. Das pulverförmig vorliegende Kationborosulfid und eine daraus hergestellte Suspension oder kolloidale Lösung eignen sich für die Ausrüstung von Beschichtungsstoffen und Vollkörper-Bauteile von Werkstoffen aller Art, die die halbleitenden Eigenschaften des Pulvers nutzen.

## Beschreibung

Die vorliegende Erfindung betrifft pulverförmig vorliegendes halbleitendes Kationborosulfid und Mischungen derselben mit einer geringen Korngröße im kolloidalen Bereich, einer geringen Wasserlöslichkeit, einer Struktur, die dem des Porphyrin entspricht oder ähnelt und wenigstens zwei der folgende Eigenschaften gleichzeitig aufweist:
a. eine Photoelektrische/ Photokatalytische Wirksamkeit vergleichbar mit dem des nanoskaligen Titandioxid und seinen Dotierungsformen in seiner kristallinen Form des Anatas;
b. einen ausgeprägten NOx-Abbau-Mechanismus vergleichbar mit dem des nanoskaligen Titandioxid und seinen Dotierungsformen in seiner kristallinen Form des Anatas;
c. eine pyroelektrische (thermoelektrische) Eigenschaft vergleichbar mit dem der Alkali-Niobate und Alkali-Tantalate;
d. Stromerzeugende Eigenschaften vergleichbar mit dem der Alkali-Niobate, Alkali-Tantalate, Silizium und Perowskite;
e. eine ausgeprägte elektromagnetische Strahlung, die bei vielen halbleitenden Materialien bekannt sind;
f. Bakterizide Wirksamkeit vergleichbar mit dem der Alkali-Borate, der löslichen Bor-Oxide sowie der unlöslichen kolloidalen Kation-Borate;
g. Bakterizide Wirksamkeit vergleichbar mit dem der Elemente Bor und Schwefel;
h. einen elektrostatischen Abstoßungsmechanismus von Mikroorganismen;
i. und komplexbildende Eigenschaften vergleichbar mit dem der Alkali-Borate, der löslichen Bor-Oxide sowie der unlöslichen kolloidalen Kation-Borate in Bezug auf Glykole, deren Derivate oder Glykol-Gruppen.

Ferner betrifft die Erfindung ein Verfahren zur Herstellung des Pulvers, eine kolloidale Lösung, die dieses Pulver umfasst, die Verwendung des Pulvers oder der kolloidalen Lösung für die insektizide Ausrüstung (insbesondere von zellulosehaltigen Werkstoffen wie Holz, Papier oder Komposite wie WPC, sowie Leder, Baumwolle, Seide und Chitinhaltige) sowie ein entsprechendes insektizid ausgerüstetes Holzschutzmittel. Des Weiteren betrifft die Erfindung die Verwendung des Pulvers oder der kolloidalen Lösung als Konservierungsmittel für die fungizide oder bakterizide Ausrüstung insbesondere von Lacken, Farben, Putze und Mörtel oder ähnlichen Werkstoffen und Produkten auf pflanzlicher oder tierischer Basis sowie die spezielle Anwendung als antibiotisch wirksame Mineralzusammensetzung als Vor- oder Hauptkomponente in Arzneistoffen, die Entwicklung und die Herstellung derselben. Dies gilt im speziellen besonders für den Bereich sogenannter antibiotisch resistenter Bakterien (=Superbakterien) und Bakterienstämme.

Im Weiteren betrifft die Erfindung die Verwendung des Pulvers oder der kolloidalen Lösung für funktionalisierte Beschichtungen oder Vollkörper-Bauelemente, die die Eigenschaften der Pyroelektrizität und der Photokatlyse nutzen. Im letzteren Fall stehen der dem Fachmann bekannte Selbstreinigungseffekt von Oberflächen sowie die Herstellung spezieller keramischer Katalysatoren zur Abgasreinigung im Vordergrund.

Betrachtet man gerade nun den Bereich der Pyroelektrizität stößt man immer wieder auf Themen wie Thermosensoren und Thermogeneratoren. Gerade der letztere Fachbereich wird oft als zukünftige zusätzliche oder gar neue Stromerzeugungsart gesehen, die aufgrund der Seltenheit gewisser Rohstoffe und der damit verbundenen Unwirtschaftlichkeit bisher nur ein Nischensegment belegen kann.

Dagegen besitzen Thermische Infrarotsensoren schon seit längerem eine große Bedeutung für die berührungslose Temperaturmesstechnik (Pyrometrie), die Wärmebildtechnik (Thermografie) und die Infrarotspektroskopie. Da diese im Gegensatz zu Photonensensoren meist keine Kühlung benötigen, können sie klein und ökonomisch arbeitend gestaltetet werden. Der Bau solcher Sensoren fußt in der Regel auf den seltenen und teuren keramischen Pulvern mit sogenannter thermoelektrischer oder pyroelektrischer Eigenschaft.

Dieser Bau der Thermosensoren wird u.a. beschrieben in der Veröffentlichung "Ultradünne, freitragende Lithiumtantalat-Elemente für hochdetektive Infrarotsensoren (Dresdner Beiträge zur Sensorik), 1. März 2012".

Die Pyroelektrizität beschriebt hierbei keramische Pulver, die eine permanente elektrische Polarisation ausbilden. Erwärmt man nun diese oder kühlt sie ab, laden sich die gegenüberliegenden Flächen entgegengesetzt elektrisch auf, wobei man das sich beim Erwärmen positiv aufladende Ende analoger, das andere antiloger Pol nennt. Durch Temperaturgradienten oder Dotierungsformen hervorgerufen entsteht somit eine elektrische Spanunngsdifferenz, die sich abgreifen lässt oder die in einem geschlossenen elektrischen Kreis zu Widerstandänderung führt. Hierauf beruht der thermosensorische Effekt.

In der Patentschrift DE 102009013336 A1 wird die Wirkungsweise und das Verfahren zur Herstellung eines Strahlungssensors unter der Verwendung von Lithiumtantalat und Lithiumniobat als pyroelektische Pulver hinreichend beschrieben.

Die Nutzung des thermoelektrischen Effektes lässt sich aber auch noch anders nutzen. Durch Anlegen eines elektrischen äußeren Feldes kann man Wärme erzeugen. Als Beschichtung ausgeführt kann man also gezielt eine Temperaturerhöhung an der Oberfläche erzeugen, die z.B. das Wachstum von Mikroorganismen beeinflusst oder Substanzen wie Eis zum Schmelzen bringen kann.

Gerade die in kalten Jahreszeiten oder kalten Breitengraden alltägliche Vereisung von Lackoberflächen oder technischen Gebrauchswerten ist eine große wirtschaftliche Belastung. Durch die Bildung von Eis auf Überlandstromleitungen entsteht ein erheblicher zusätzlicher Energieverlust. Auch die Flugzeugindustrie kämpft mit diesem Thema. Im Winter muss ein erheblicher auch finanzieller Aufwand betrieben werden, um mit gesonderten Chemikalien Flugzeugoberflächen wieder eisfrei zu bekommen. Ökologisch ist diese Eisbefreiung auch stark in der Diskussion. Bleibt man bei dem Beispiel des Flugzeuges so verhindert die Eisbildung auch die Flugzeit in höheren atmosphärischen Schichten, wo der Kersoinverbrauch wegen einer dünneren Atmosphäre und damit geringeren Reibung deutlich geringer ausfiele. Es ist also deutlich dass gerade die Entwicklung moderner Anti-Eis-Beschichtungen in den Fokus von Lackentwicklern gerückt ist.

So beschreibt das Fraunhoffer Institut im Jahr 2016 ein neues Verfahren mittels Plasmatechnik. Die Oberflächen werden mittels einer Plasmatechnik hierbei so nanostruktriert, dass die Oberflächenenergie zu einer Schmelzpunkterniedrigung des Wassers führt. Somit wird eine Eisbildung an der Oberfläche vermindert. Antihafteigenschaften und elektrisch leitendende Lacke können die Effekte verbessern und unterstützen. Nachteil dieser Lösung liegt in der beschränkten Möglichkeit nachträglich Oberflächen mit Plasma zu behandeln.

Der Einsatz von elektrisch leitenden Schichten, in denen Gleichstrom fließt und im Sinne eines elektrischen Widerstandes Wärme erzeugt, ist dagegen bei vielen technischen Gegenständen fast unmöglich ohne dass gegenseitige Wechselwirkung durch Kriechströme entstehen. Der Einsatz von typischen stromleitenden Materialien in Lacken wie u.a. Kohlenstoff, Kupfer oder Silber stellt auch die Frage nach der Langzeit-Witterungsstabilität der entstehenden Beschichtungen.

Aufgabe der beschreibenden Erfindung sollte es daher auch sein, ein witterungsbeständiges pyroelektisches Material zu entwickeln, dass ökonomisch gesehen nun große flächige Gebilde erlaubt.

Wie aus der Thermosensorik bisher bekannt sind die Bauteile hier relativ klein und der Preis spielt hier eine geringere Rolle. Der Einsatz von Metalloxiden aus den recht seltenen Nebengruppenelementen wie Tantalat und Niobat macht dagegen die Nutzung des pyroelektrischen Effektes für größere Flächen aufgrund des Preises fast unmöglich.

Alternativen zu den oben genannten Verbindungen sind ebenfalls sehr teuer wie das bei bestimmten Titanaten der Fall ist. Das Naturprodukt in Form des Minerals Turmalin ist technisch gesehen durchaus möglich, dagegen ist es zu selten und vor allem nicht bergmännisch dauerhaft kommerziell in größeren Mengen zu beziehen. Andere Stoffe wie Natriumnitrit sind wiederum zu giftig oder wie das Mineralgemisch Boracit zu wasserlöslich und auch zu selten.

Die beschriebene Erfindung stellt nun auch ein Verfahren dar, wirtschaftlich günstigere keramische Pulver mit erhöhten thermoelektrischen Eigenschaften zu bekommen und diese Pyroelektische Eigenschaft in flächigen Gebilden zu nutzen. Unter flächigen Gebilden sind u.a. typische Farben, Lacke, Gläser, Beton, Mörtel, Putze, Folien oder Gewebe aus organischen und/oder anorganischen Bindemitteln aller Art zu verstehen.

Der vorliegenden Erfindung hat insbesondere damit auch die Aufgabe gelöst, ein im Vergleich zu kommerziell erhältlichen Materialien günstigere keramische Materialien mit einer verbesserten pyroelektische Eigenschaft zu generieren. Dieses Pulver kann dann als Suspension, als kolloidale Lösung oder als Pulver vorliegend in Beschichtungen oder in Vollbauteile eingebracht werden, die diese pyroelektische Eigenschaft als Funktion nutzt. Die wesentlichen Nutzungs-Eigenschaften umfassen die die folgenden Aspekte:
1. Thermosensorik in Form von Pyrometrie, Thermographie und Infrarotspektroskopie
2. Anti-Eis-Wirkung auf Oberflächen
3. Anti-Statische-Wirkung auf der Oberfläche des Pulvers
4. Spanungspotenialerzeugung als Bestandteil der Energiegewinnung und/oder Energiespeicherung durch Temperaturgradienten oder Dotierungsformen
5. Wachstumsbeinflussende Wirkung in einer Beschichtung oder eines Bauteils auf Mikroorganismen oder Organika durch Wechselwirkung eines äußeren elektrischen Feldes
6. Anti-Haft-Effekte

Gemäß der vorliegenden Erfindung können mit dem hergestellten Pulver somit Anti-Eis-Beschichtungen auf große flächige Substrate wirtschaftlich in Form eines Lackes hergestellt werden. Dieser kann nun bei Anlegen eines äußeren elektrischen Feldes aufgrund einer deutlich messbaren Wärmeerhöhung Eis auf seiner Oberfläche zum Schmelzen bringen.

Diese Wärmeerhöhung kann als ungiftiges Wirkprinzip gesehen werden und stellt damit eine neue Art von hygienischer Beschichtung dar. Dieses Prinzip ist nicht nur ungiftig, sondern unterliegt ferner auch nicht der Europäischen Biozid-Verordnung und kann sowohl interieur als auch exterieur ausgelegt werden; denn der Schutz von organischen Werk- und Baustoffen steht in unserem täglichen Wirken immer wieder im Vordergrund.

Natürliche und synthetisch generierte organische Materialien unterliegen in der Luft, im Wasser und in zahlreichen anderen Medien einem Alterungsprozess. Hierbei werden größere Verbände von chemischen Molekülen in kleinere Einheiten gecrackt. Der komplexe Baustoff schwächt sich allmählich und löst sich quasi über die Zeit gesehen durch den Einfluss von Energie wie UV-Licht, Wasser und Luftsauerstoff regelrecht auf. Einen großen Anteil an dieser Verwitterung übernehmen auch die große Anzahl von Mikroorganismen, also jene ein- bis wenigzelligen mit dem Auge nicht sichtbaren Kleinstlebewesen wie Viren, Bakterien, bestimmte einfache Pilze und Algen. Besonders die einfachsten unter ihnen haften sich gerne an jede erdenkliche Oberfläche und ernähren sich meist dadurch, dass sie Enzyme in die unmittelbare Umgebung ausscheiden und damit Polymere, wasserunlösliche Nährstoffe aufschließen und in ihre Zellen aufnehmen. Im Bereich von Holzwerkstoffen sind es niedere Pilze, die so als sogenannte Erstbesiedler den Zerstörungsprozess einleiten. Diese lassen sich bevorzugt in Rillen und Poren nieder. Mittels eines ausgeschiedenen Enzyms, der sogenannten Celluase und ausreichend Wasser wird nun die lange Polymerkette der Ligniocellulose der Zellwände in kleine Zuckerbausteine gecrackt und somit in verwertbare Nahrung verwandelt. Der Pilz kann somit wachsen und dient wiederum als Nahrungsquelle für höhere Pilzarten. Durch die weitere Besiedelung schreitet die Zerstörung immer weiter voran.

Mit Konservierungsmitteln versuchen wir Menschen nun unsere Produkte vor diesen Mikroorganismen zu schützen oder verleihen dem Produkt eine weitere schützende Funktionalität. In einer Lackdose wird die fertige Farbe vor dem Verschimmeln geschützt z.B. durch den Einsatz von Kaliumsorbat oder die Farbe an sich beinhaltet in ihrer Rezeptierung einen Stoff der das spätere gestrichene Substrat schützen soll wie es nun z. B. bei Holzschutzmitteln der Fall ist.

Im Bereich des Holzschutzes sind Verbindungen wie 3-Iod-2-propinylbutylcarbamat oder Triazole wie Propiconazol oder Tebuconazol bekannt und im Einsatz. Ferner werden anorganische Verbindungen wie Kupfer-, Silber-, Quecksilber-, Arsen- oder Chromsalze eingesetzt.

In Wandfarben für den Hospitalbereich finden in neuerer Zeit Verbindungen wie Nanosilber oder Nanokupfer Einzug. Damit sollen sich keine krankheitserregenden Bakterien auf dem Anstrich vermehren können.

Neben den oben beschriebenen Kleinstlebewesen sind auch eine große Schar von Insekten für die Vernichtung menschlicher Baustoffe und Bauwerke verantwortlich. Im Holzbereich kämpft man gegen die ameisenähnliche Termite. Diese Art nutzt Hölzer als Nahrungsquelle, aber wandelt es auch enzymatisch in eine pastenartige Substanz um, um dann mit diesem Kitt die bekannten Termitenhügeln zu errichten. Zum Schutz vor solchen Tieren kommen hochwirksame Nervengifte wie z. B. das Permethrin, gerne sogar in Verbindung mit Schwermetallen wie Quecksilber, Arsen oder Organo-Cyaniden zum Einsatz. Leider sind diese Stoffe auch hochwirksam gegen Mensch und Tier und reichern sich bevorzugt im Fettgewebe und in der Leber an, wo sie dann chronische Krankheitsbilder verursachen oder in hohen Dosen absolut tödlich wirken. So hat man nun beim Herstellen dieser Chemikalien, der Handhabung und der anschließenden Anwendung mit hochgiftigen Substanzen Umgang, ohne sich dessen wirklich bewusst zu sein. Am Ende steht dann noch die Entsorgung als Müll, die dann nur als Sondermüll gehandhabt und verbrannt werden muss. Der ökologische und ökonomische Schaden aufgrund dieser immensen Größe ist gar nicht berechenbar und schon gar nicht kontrollierbar.

In einigen Bereichen der Farben- und Lackindustrie versucht man hier immer wieder alternativ vorzugehen. Altbewährt sind im Bereich der Fassadenfarben sogenannte Silikatfarben oder Silikat-Dispersionsfarben. Hauptbestandteil sind die hochalkalischen Alkali-Wassergläser, also die wässrigen Alkalisalze der Kieselsäure, mit einem pH-Wert größer 12. Aufgrund des hohen alkalischen pH-Bereichs benötigen diese Farben dann keine Konservierungsmittel und halten in der Regel Fassaden über Jahre hinweg algen- und moosfrei. Die Handhabung der Farbmischungen ist dagegen nicht ganz ungefährlich, da Wassergläser Schleimhäute (besonders der Augen, Mund, Nase, Magen und der Haut im Allgemeinen) stark angreifen. Wassergläser penetrieren regelrecht die Hautschichten sofort bei Kontakt und führen dann erst langsam aber dauerhaft zu Auflösungserscheinungen. Die Schädigung der Haut ist daher erst nach Tagen durch das Abschälen bestimmter Regionen sichtbar und lange anhaltend. Die Augenbindehaut und die Augenhornhaut werden sofort angegriffen und zum Teil löst sich die Netzhaut ab.

Als Alternative im Bereich der Konservierung und im Bereich der bioziden und fungiziden Mittel für den Bereich Holzschutz sind Borsäure und deren lösliche Alkalisalze (=Borate wie das Borax oder chemisch korrekt Dinatriumtetraborat-Hydrat) dagegen schon seit Jahrhunderten bekannt und wurden bisher gerne im Bereich der ökologischen Farben aber auch in der Medizin und heute immer noch in der Alternativ-Medizin eingesetzt.

Unter den vielfältigen Patentschriften, Veröffentlichungen und Internetrezepten sei hier nur zum Beispiel die Patentschrift DE 60313610 T2 erwähnt. Hierin beschreibt der Erfinder eine verdünnte wässrige Lösung aus Borsäure mit feinem nicht-kolloidalen Quarz für den Schutz von Obstbäumen, Gemüsen aber auch Fischen gegen typische Pflanz- und Wuchskrankheiten, welche durch Pilze oder Bakterien ausgelöst werden. Auch wird das Präparat im Bereich der Nagelpflege empfohlen.

Mit dem Einführen der europäischen Biozid Richtlinie Anfang der 2000er, die nun seit September 2014 in die Europäische Biozid-Verordnung übergegangen ist, taucht im Chemikalienrecht eine neue Kennzeichnung für Borsäure und deren löslichen Salze auf. Da Studien an Ratten zufolge das lösliche Boroxid mutagen wirken soll, ist hier eine viel höhere Gefahrstoffeinstufung erfolgt. Auf Grund der Wasserlöslichkeit werden diese Chemikalien aktuell als stark gefährlich und gesundheitsgefährdend beschrieben. Besonders die hohe Wasserlöslichkeit und damit das extreme Auswaschungsverhalten dieser Borverbindungen und die Emission in die Umwelt sind sehr umstritten und werden als kritisch gesehen. Die Wasserlöslichkeit führt zu einer extremen Kennzeichnungspflicht aller erdenklichen Formulierungen im dem Bereich der Materialwissenschaft. Die Suche nach kennzeichnungsarmen oder gar kennzeichnungsfreien Chemikalien mit einer ähnlichen Schutzwirkung wie der des Boroxides wurde damit wünschenswert.

Darüber hinaus gibt es wasserunlösliche Borate. Hierzu zählt unter anderem auch das Calciumborat, in seiner natürlichen Form als Colemanit bekannt.

Die US 2002/0182431 A1 beschreibt ein Verfahren zur Herstellung von mit Borat behandeltem Holzwerkstoff. In der Patentschrift wird die Fungizide Wirkung von Boraten diskutiert, wobei Calciumborat als wegen seiner geringen Löslichkeit vorteilhaft bezeichnet wird. Auf eine Korngröße, wie sie sich gemäß der vorliegenden Erfindung als wesentlich herausgestellt hat, wird in der US 2002/0182431 allerdings nicht eingegangen.

Gemäß der WO 01/87559 A2 eignet sich Calciumborat als Pestizid für Verbundstoffe auf Basis von Ligniocellulose. Beschrieben wird dort, dass es auf die Teilchengröße des Calciumborats nicht ankommt. In der WO 01/87559 A2 wird eine mittlere Teilchengröße von 1 bis 500 µm empfohlen, vorzugsweise 10 bis 150 µm.

Diese Überlegung führte zu der WO Anmeldung mit der Nummer WO 2016/110554 A1. Hierin wird die Herstellung und die Anwendung eines unlöslichen kolloidalen Calcium-Metallborat-Gemisches beschrieben.

Als kennzeichnungsfreies Material und damit weitgehend ökologisch und okotoxikologisch unbedenklich geht es in den Bereich des Schutzes von ligninbasierten Werkstoffen wie Holz, Papier oder Holzkomposite (WPC); aber auch natürliche oder künstliche Textilien oder die Verwendung im breiten Bereich der Farbe und Lacke als Schutzausrüstung sind denkbar.

Die Wirkung als biozides Ersatzmaterial geht letztendlich auf die Eigenschaft der Borate als Komplexbildner zurück. Niedrige oder höhere Zuckermoleküle werden umschlossen und werden so schlechter als Nahrungsgrundlage für niedere entwickelte Mikroorganismen (zum Beispiel "Bläue" (niederer Holzpilz) und Schwarzschimmel) zugänglich. Auch wird angenommen, dass die Enzyme (bekannt auch als Celluase) solcher Pilzen und Hefen, welche die Cellulose in Zucker spalten, von Boraten umhüllt werden. Das Fehlen einer frei zugänglichen Nahrungsquelle bedeutet den verminderten Bewuchs dieser Erstbesiedler an einer Oberfläche und damit die Eindämmung einer weitergehenden biologischen Kontaminierung.

Das Material als solches ist rein mineralisch und kennzeichnungsfrei bzw. kennzeichnungsarm und gilt für Mensch, Tier und Umwelt als unbedenklich. Durch seine kommerzielle Größe im Bereich einiger hunderter Nanometer ist es im Vergleich zu Salzen mit Größen von < 1nm nicht in der Lage durch Zellmembranen durchzuwandern. Eine tötende Wirkung durch Boroxid in einer Zelle ist somit auszuschließen. Damit ist aber nun auch ein weitgehender Schutz gegen Insekten wie Ameisen und Termiten über einen aktiven Tötungsmechanismus auszuschließen. Im Falle eines nötigen Schutzes auch gegen holzzerstörende Insekten muss weiterhin mit hochgiftigen Nervengiften wie z.B. Permethrin oder Imidacloprid gearbeitet werden.

Die Wirkungsweise des Materials über Komplexbildung limitiert außerdem das Einsatzgebiet. Eine starke Reaktion oder Interaktion mit Bestandteilen in einer Farb- und Lackformulierung ist zu erwarten. So verknüpft sich Boroxid (welches an der Oberfläche des Kristallits sitzt) mit Polyvinylalkoholen und mit Cellulosen jeder Art. Beides sind beliebte Bindemittelbestandteile in Farb- und Klebstoffformulierungen wie wir sie in Wand- und Fassadenfarbe oder auch in Holzklebstoffen finden. Bei der Zugabe von Boraten zu den genannten Bindemittel und anderen findet eine spontane Gel-Bildung statt. Dieses ist dann meist nur wieder schwer trennbar und extrem zähplastisch. Das viskose Verhalten einer Farbe wird im Ruhezustand dünnflüssig und unter Bewegung versteift sich die Farbsuspension. Für die Verarbeitung mit dem Pinsel als Streichprodukt oder als Spritzprodukt mit der Lackierpistole ist dieses viskose Verhalten sehr schwer zu handhaben. Auch muss die Dosierung des unlöslichen Borates in die Formulierung genau überdacht werden. Ein Teil wird sich an bestimmte Bestandteile in der Rezeptierung dauerhaft binden. Somit fällt dieser Anteil als Wirksubstanz schon von vorneherein weg. Gleichzeitig muss überprüft werden, ob andere Rezeptbestandteile ebenfalls erhöht werden müssen. Um die Produktsicherheit zu gewährleisten muss daher im Einzelfall eine genaue Studie über Wirksamkeit, Viskosität und Verarbeitungsverhalten erfolgen, was den kommerziellen Einsatz stark verzögert und den kommerziellen Erfolg gar in Frage stellt.

Die vorliegende Erfindung hat auch die Aufgabe ein weitgehend kennzeichnugsfreies Material zu entwickeln, um somit Substrate und Beschichtungen in ihrem natürlichen Zerfall zu stoppen. Dabei werden die durch die unlöslichen Borate genutzten Vorteile übernommen und die angegeben Nachteile vermieden.

Die vorliegende Erfindung erweist sich als fungizider und insektizider Ersatzstoff und im Besonderen als antibiotisch wirkendes Material für sich allein oder in Kombination mit handelsüblichen Wirkstoffen. Daneben weist es wie bereits beschrieben als Halbleiter enorme photokatalytische und pyroelektrische Eigenschaften auf. Damit geht das Anwendungsfeld weit über das Einsatzgebiet als Ersatzstoff für handelsübliche Bakterizide hinaus. Dem Fachmann sind hier viele Anwendungen, mit vergleichbaren Materialien, wie die der Grätzelzelle, der des Thermogenerators zur Stromerzeugung genauso bekannt, sowie der Einsatz als Strahlenschutzmittel oder wie bereits beschrieben die Realisierung von Anti-Eis-Beschichtungen auf verschiedenen Substratuntergründen.

Diese Aufgabe wird gemäß der vorliegenden Erfindung gelöst durch ein pulverförmig vorliegendes Kationborosulfid mit halbleitenden Eigenschaften und der allgemeinen Formel:
a. R_{α}Z_{β}B_{1-α-β}S_{2-γ}X_{γ} ·BS₂, wobei
   Z = Nebengruppenelement als Kation einschließlich der Lanthanide und Actiniden;
   R = anderes Hauptgruppenelement als Kation (ohne Halogene und Edelgase) oder beliebiges Gemisch derselben den mit molaren Verhältnissen von α+β < 0,95;
   X=Halogenide mit γ < 0,8; B=Bor und S=Schwefel bedeutet;
b. einer Wasserlöslichkeit von höchstens 2 g/l (bei 20°C), angegeben als freies Bor, und 10 g (bei 20°C), angegeben als freier Schwefel;
c. einer Korngröße d90, bestimmt gemäß ISO 20998-1:2006, von weniger als 900 nm;
d. einer Bordisulfid-Molekülstruktur, die dem des Porphyrin entspricht oder ähnelt,
wobei das Pulver Haftvermittler ausgewählt aus der Gruppe der Silikate, Titanate, Aluminate, Phosphonate, Phosphazene, Zirkonate, Silane, Siloxane und Mischungen davon enthalten kann,
oder wobei das Pulver in kolloidaler Form in Wasser oder anderen Lösemittel vorliegt und als Hauptadditiv mit > 5 Gewichtsprozent (als Netz- und Dispergiermittel organische Verbindungen der Porphyrine enthalten kann,
oder wobei das letzt genannte Pulver durch einen Trocknungsprozeß zum Beispiel durch Gefrier- oder Vakuumtrocknung aus der kolloidalen Lösung trocken gewonnen wird ohne dabei aber die Porphyrine zu zerstören.

Erfindungsgemäß wird die Wasserlöslichkeit vorzugsweise durch konduktometrische Titration bestimmt, zum Beispiel nach Kohlrausch oder durch potentiometrische Direkttitration.

Die Wirkungsweise der beschriebenen Erfindung liegt in der borosulfidischen Halbleitereigenschaft begründet, die durch die Fremdbesetzung durch Bor im Sulfid-Kristallgitter einerseits wie durch das Vorliegen in kolloidaler Form andererseits sowie durch eine möglich weitere Verstärkung letztgenannter Mechanismen durch die Komplexierung der Kristalle durch Porphyrine im Vergleich zu herkömmlichen Kationsulfiden noch zusätzlich enorm verstärkt wird bzw. zu einer Multifunktionalität führt.

Durch nicht stöchiometrische Anteile von Bor und Schwefel entstehen später Defektstellen im Borosulfid-Kristall, die in Kombinationen mit weiteren Kationen einerseits und Anionen andererseits die Halbleitereigenschaften des Materials variabel beeinflussen können. Hierzu zählt dann letztendlich auch die technische Möglichkeit bei unterschiedlichen BS-Verhältnisse p- und n- Leiter zu bilden. Die Kombination zweier Materialien unterschiedlicher Elektronenniveaus beschreibt damit das bekannte Prinzip einer Sekundärbatterie oder das einer Solarzelle, allerdings hier im letzteren Fall mit dem Unterschied dass ein breiteres Energieniveau (bis hin zur Wärmestrahlung) zur Erzeugung von Energie genutzt werden kann.

Die Festkörperphysik beschreibt allgemein Halbleiter oder halbleitende Materialien als Stoffe, die durch äußere Energie (wie zum Beispiel UV-Licht) Elektronen verschieben, so dass es zu einem Bereich hoher und einem Bereich niedriger Elekronendichte kommt, die man als Stromfluß abgreifen kann. Dies nutzt man beim Element Silicium wie dem Fachmann bekannt zur Stromerzeugung aus. Je feiner nun ein solches halbleitendes Pulver ist, je mehr Defektstellen es aufweist und je mehr Fremdatome mit anderen Energieniveaus verwoben sind, desto stärker können diese Elektronenversschiebungen sein. Betrachtet man die Mineralgruppe der Sulfide mit dem bekannten Vertreter des Pyrits (Eisensulfid FeS₂), so findet man hier viele natürliche Halbleiter mit hohem Vermögen Elektronen zur verschieben; dies kann je nach beschriebener Kornfeinheit und Dotierung schon mit einer Energiestrahlung im IR-Bereich (also Wärmestrahlung) ausgelöst werden.

Betrachtet man nun einen Mikro- oder gar Nano-Kristalliten an seiner Oberfläche, so besitzt dieser nun nach der Energieanregung von außen eine definierte Menge von verschobenen Elektronen. Stößt dieser Kristallit an seiner Grenzfläche an einem Weiteren mit allerdings differenzierter Elekronenzahl an dessen Oberfläche aneinander, kommt es zum Stromfluß; hier im beschrieben Fall wird ein Kurzschluss beschrieben. Dieser Effekt wird technisch im Bereich der Thermoelektrizität durch den Bau von Thermosensoren, Thermowandlern und Thermoelementen zur Messung von Temperatur seit Jahrzehnten gekonnt umgesetzt.

Betrachtet man nun weiter die Grenzfläche einer Elementarzelle eines kolloidalen wasserunlöslichen Borosulfides bei dem durch eine Elektronenanregung eine Elektronenanreicherung im Bereich des Schwefels stattgefunden hat, so wirkt es auf seine direkte Umgebung als elektrisch negatives Teilchen.

Niedere Bakterien, Pilze und Algen, welcher in unserer natürlichen Atemluft vorhanden sind, und als Erstbesiedler jeder Oberfläche gelten sind wiederum selber an ihrer Oberfläche elektrisch negativ geladen. Es kommt zur elektrostatischen Abstoßung zwischen einer "Sulfid- und einer Organismus-Oberfläche". Eine Vermehrung und Ausbreitung der Erstbesiedler findet nun nicht statt, als Nahrungsgrundlage für höhere Mikroorganismen fehlen diese.

Auch sind die freien bzw. leicht verschiebbaren Elektronen der π-Konfiguration der Porphyrin Struktur sehr aktiv. Diese wandern durch Zellmembranen und können hier die biochemischen Prozesse stark beeinflussen. Atmungsvorgänge in Zellen werden stark beschleunigt; Organische Zellen sind damit einer verstärkten Oxidation ausgesetzt und altern schneller. Auch können bei Vorhandensein von Wasser durch diese Elektronenverschiebung kurzzeitig alkalische Hydroxidionen (OH⁻) und Hydridsulfidionen (HS⁻) begrenzt an lokalen Stellen entstehen. Dieses basische Milieu ist für die meisten Mikro- und gar Nano-Organismen kein idealer Lebensraum. Zudem wird das Sulfid an seiner Grenzfläche mit Sauerstoff Sulfit (SO₃²⁻) bilden. Dies wiederum verhindert die Atmungsprozesse.

Makroskopisch betrachtet finden all diese Effekte nur im Nanobereich der Grenzflächen eines Kristalls statt und kann somit höher entwickelte Pilze, Viren, Bakterien und Algen gar nicht erreichen. Toxikologisch und Ökotoxikologisch gesehen ergibt sich somit für die Welt und Umwelt kein erhöhtes Schadens- oder Sicherheitsrisiko, weshalb natürliche Sulfide wie zum Beispiel das Pyrit schon lange als kennzeichnungsfreie Chemikalien gelten.

Die beschriebenen Elektronenverschiebungen oder auch - bewegungen bewirken wie in der Elektrizitätslehre hinreichend bekannt immer einen magnetischen Effekt. Dieser elektromagnetische Effekt wird als Feldlinie sichtbar und als Strahlungsschwingung ähnlich der der Lichtstrahlung oder der des Schalls als Energie-Welle beschrieben. Nach der Wellentheorie können sich Energiewellen nun gegenseitig beeinflussen, zum Beispiel verstärken, vermindern oder gegenseitig auslöschen. Auch hier gilt: die elektromagnetische Strahlung, die bei einem Halbleiterkristall auftritt ist für uns Mensch und Messgeräte kaum spürbar oder messbar. Diese absolut kleine Minimalstdosis, die nur eng lokal begrenzt wirken kann, ist allerdings für ein sehr kleines Insekt, welches wiederum selber mit einem sehr geringen Mengen an Energie zu Kommunikationszwecken arbeitet, eine durchaus wahrnehmbare Größe. Und Energieniveaus ähnlicher Energiemengen beeinflussen sich.

Tiere wie die staatenbildenden Insekten wie die Ameisen, Termiten, die rote Betonmauerspinne und auch andere kommunizieren miteinander durch Pheromone in Kombination mit für uns Menschen nicht hör- und kaum messbare hoch- oder niederfrequente Schallwellen.

Diese werden nun beeinflusst durch andere Energiewellen, wie wir diese in Form der Nano-elektromagnetischer Strahlung des beschriebenen Halbleiterkristallits finden. Die Kommunikationssignale werden also verfälscht. Das irritierte Tierchen, wie die Ameise, Termite wird diese Region meiden wollen oder müssen. Es befindet sich für sie in der Kommunikation ein blinder Fleck. Das Tier wird dabei selber nicht aktiv getötet, sondern vertrieben. Es liegt somit kein klassisches Insektizid vor.

Die beschriebenen Wirkmechanismen werden also insgesamt durch die erfindungsmäßigen Zusammensetzungen nun enorm verstärkt und es entsteht darüber hinaus eine Multifunktionalität. Die gute Verfügbarkeit der Ausgangselemente erlaubt zudem eine wirtschaftlich interessante Umsetzung von verschiedenen Anwendungsfeldern.

Es hat sich so nach Beimpfung von Leder mit zerstörenden Pilzen wie *Aureobasidium pullulans*, *Sclerophoma pithyopila* und *Aspergillus niger* gezeigt, dass das erfindungsgemäße Pulver als kolloidale Lösung mit einem Anteil von 10% Chlorophyll versehen durch die sehr geringe Korngröße von 20 nm sehr tief in das Leder eindringen kann (> 3mm) und verglichen mit handelsüblichen Schutzausrüstungen ein signifikant breiteres unbefallenes Areal zeigt. Die erfindungsgemäße Zusammensetzung über ein kolloidal verteiltes unlösliches Kationborosulfid in Kombination mit Haftvermittlern erhöht die Auswasch-Resistenz und die langanhaltende Wirksamkeit. Die Haftvermittler sorgen hier für die dauerhafte Verbindung zum Substrat. Hiermit wird ein ökologisch positiver Gesamtgedanke abgerundet, dass Wirkstoffe nicht in die Umwelt emittiert werden sollen.

Gemäß der vorliegenden Erfindung werden damit auch alle ligninhaltigen natürlichen und künstlichen Werkstoffe geschützt. Des Weiteren gilt dies auch für andere Cellulosederivate wie wir sie in zum Beispiel Baumwolle, Seide oder Chitin vorfinden. Zerstörende Pilze und Bakterien werden insgesamt in ihrem Wachstum gehemmt bzw.in ihrer Entwicklung behindert, während die Mittel gleichzeitig für Menschen, Haustiere und Umwelt ungiftig sind.

Bei Versuchen wurde insbesondere die komplexierende Wirkung auf Glykolipide gezeigt. Hierdurch wird der Aufbau von Zellwänden bei sogenannten Superbakterien erheblich gestört. Die erfindungsmäßige Zusammensetzung stellt somit erstmalig ein mineralisch basiertes Antibiotika dar.

Insbesondere konnten auch in Versuchen nach dem Tränken der erfindungsmäßigen kolloidalen Lösung mit Holz, Erde und Sandmischungen gezeigt werden, dass diese Areale von staatenbildenden Insekten wie Ameisen gemieden wurden. Ein aktives Abtöten fand dabei hier nicht statt. Die Wirkung liegt in einer erhöhten elektromagnetischen Nanostrahlung eines Halbleiters.

Es wurden des Weiteren auch spezielle Eigenschaften wie die der photokatalytischen und der pyroelektrischen (thermoelektrischen) nachgewiesen.

Damit ergeben sich für eine bakterizide Wirkung allein betrachtet je nach Anwendung und Applikation gleich mehrere mögliche Wirkmechanismen:
a. die physiologische Wirkung von Schwefel an der Kristalloberfläche
b. Photokatalytische Effekte und damit die Erzeugung von Sauerstoffradikalen und Hydroxiden an Kristallgrenzen
c. die komplexbildende Wirkung von unlöslichen Bor und unlöslichen Boraten an den Kristallgrenzen
d. Pyroelektrische Effekte an den Kristallgrenzen sorgen für statische Abstoßung von Fremdkörpern (=Keime)
e. das Anlegen eines zusätzlichen elektrischen Feldes führt durch die Pyroelektrischen Effekte an den Kristallgrenzen zu Temperaturerhöhung und schafft somit lebensfeindliche Bedingungen

Die erfindungsmäßige Zusammensetzung kann als keramisches Pulver vorliegen oder in kolloidaler Form in Wasser oder anderen Lösemitteln. Daneben sind dem Fachmann Verfahren bekannt, die durch Pulversynthese hergestellten Materialien direkt (in einem "in situ-Verfahren") auf anderen Pulvern abzuscheiden. Die Verwendung dieser Core Shell-Pulver kann wie bereits beschrieben in gleicher Weise erfolgen.

Der Vorteil dieser Vorgehensweise dürfte dem Fachmann offen sichtlich sein: Die teurere Wirksubstanz umschließt ein billigeren Kern. Dies macht dort Sinn, wo das Kerninnere eines Pulvers nicht wirklich den späteren Einsatz mit beeinflusst. Dies gilt insbesondere dann, wenn nur die Oberfläche bzw. die Hülle mit einer bestimmten Dimension die Eigenschaft bzw. die Wirksamkeit eines so hergestellten Gesamtkorns bestimmt. Dieses Konzept eines Kern-Hülle Teilchens macht auch dann weiterhin Sinn, wenn der Aufbau eines Eigenschaftsgradienten angestrebt wird.

Als Kernmaterial kommen viele mögliche Stoffe in Betracht. Aus dem Bereich der anorganischen Werkstoff-Chemie sind dies unter anderem wie folgt:
- Natürliche Minerale oder Mineralgemische bzw. Steingemische oder Recylingpulver von amorpher bis kristalliner Struktur, bevorzugt mit einem geringen pyroelektrischen Effekt, aus dem Bereich der Gerüst-, Ring- oder Schichtsilikate, vorzugsweise solche wie aus dem Bereich der Quarze, Feldpäte wie auch Spodumene, Feldspatvertreter wie Syenite, sowie der Bentonite, Nontronite, Glimmer, Tone, Lehme, Kaoline, Talkum, Smectite, und im besonderen Fall aus dem Bereich der Dunite mit Olivin bestehend aus den Mineralen Forsterit und Fayalit als Hauptbestandteil
- Synthetische Minerale oder Mineralgemische von amorpher bis kristalliner Struktur, bevorzugt mit einem geringen pyroelektrischen Effekt, aus dem Bereich der Metalloxide, vorzugsweise Zeolithe, insbesondere der aus dem Bereich der SAPO-Pulver oder Lithium-Zeolithe
- Ebenso synthetische Minerale oder Mineralgemische, bevorzugt mit einem geringen pyroelektrischen Effekt, aus dem Bereich der Metallnichtoxide, der Elemente Si, Al, P, B, aber auch synthetische Minerale oder Mineralgemische mit geringeren pyroelektrischen Effekt aus dem Bereich der SIALONE, vorzugsweise jedoch aus dem Bereich der Carbide und im besonderen Fall aus dem Bereich der Siliciumcarbide und Borcarbide
- Ebenso Stoffe der organischen Werkstoff-Chemie (u.a. auch Hybride) aus natürlichen und synthetisch hergestellten Pulver mit amorpher bis kristalliner Struktur aus den Bereichen der Cellulose, Holzmehle, Korkmehle, Baumwolle, Seide, Chitin, Polyacrylate, Polymetacrylate, Polyurethane, Polysulfide, Polynitrile, Polyvinyle, Polyalkyde, Polyvinylacetate, Polyamide, Silikone, Silane, Siloxane, Phosphazene, sowie Co-Polymere der genannten, vorzugsweise jedoch aus dem Bereich der Fluorbindemittel, und im besonderen Fall aus dem Bereich der PTFE.
- Ebenso Metallsalze, Salzschmelzen, Metallpulver und Metallpulverlegierungen natürlichen oder synthetischen Ursprungs von amorpher bis kristalliner Struktur
- Ebenso Mineralmischungen aus dem oben genannten Materialien in beliebigen Abmischungen sowie Mischungen der Minerale oder Mineralmischungen mit den genannten organischen Pulver und genannten Metallpulvern

### Detaillierte Beschreibung der Erfindung

In einer ersten Facette betrifft die Erfindung ein pulverförmig vorliegendes Kationborosulfid der allgemeinen Formel
a. K_{α}Z_{β}B_{1-α-β}S_{2-γ}X_{γ} ·BS₂, wobei
   Z = Nebengruppenelement als Kation einschließlich der Lanthanide und der Actiniden;
   R = anderes Hauptgruppenelement als Kation (ohne Halogene und Edelgase) oder beliebiges Gemisch derselben den mit molaren Verhältnissen von α+β < 0,95;
   X=Halogenide mit γ < 0,8; B=Bor und S=Schwefel bedeutet; und
b. einer Wasserlöslichkeit von höchstens 2 g/l (bei 20°C), angegeben als freies Bor, und 10 g (bei 20°C), angegeben als freier Schwefel; und
c. einer Korngröße d90, bestimmt gemäß ISO 20998-1:2006, von weniger als 900 nm, und
d. einer Bordisulfid-Molekülstruktur, die dem des Porphyrin entspricht oder ähnelt, wobei das Pulver Haftvermittler ausgewählt aus der Gruppe der Silikate, Phosphate, Titanate, Aluminate, Phosphonate, Phosphazene, Zirkonate, Silane, Siloxane und Mischungen davon enthalten kann.

Vorzugsweise beträgt die Korngröße d90 des erfindungsgemäßen pulverförmig vorliegenden Kationborosulfid weniger als 900 nm und vorzugsweise weniger als 800 nm, insbesondere weniger als 750 nm, beispielsweise weniger als 700 nm, wie weniger als 650 nm, vorzugsweise weniger als 600 nm, insbesondere weniger als 550 nm, wie weniger als 500 nm oder weniger als 450 nm und vorzugsweise weniger als 400 nm, insbesondere weniger als 350 nm, beispielsweise weniger als 300 nm, wie weniger als 250 nm, vorzugsweise weniger als 200 nm, insbesondere weniger als 200 nm, wie weniger als 150 nm oder weniger als 100 nm, jeweils bestimmt gemäß ISO 20998-1:2006.

Darüber hinaus ist bevorzugt, dass die Wasserlöslichkeit höchstens 0,1 g/l Wasser beträgt (bei 20°C), bezogen auf freies Bor und 0,3 g/l Wasser beträgt (bei 20°C), bezogen auf freier Schwefel.

Ein bevorzugtes Pulver ist dadurch gekennzeichnet, dass es mindestens 50 Gew.-% R_{α}Z_{β}B_{1-α-β}S_{2-γ}X_{γ} umfasst, vorzugsweise mindestens 60 Gew.-% R_{α}Z_{β}B_{1-α-β}S_{2-γ}X_{γ}, bevorzugter mindestens 65 Gew.-% R_{α}Z_{β}B_{1-α-β}S_{2-γ}X_{γ}, insbesondere mindestens 70 Gew.-% R_{α}Z_{β}B_{1-α-β}S_{2-γ}X_{γ}, wie mindestens 75 Gew.-% R_{α}Z_{β}B_{1-α-β}S_{2-γ}X_{γ}.

Die Pulver können wie beschrieben in einer späteren Anwendung für sich alleine vorliegen oder diese können vor dem Einsatz die Oberfläche von anderen Werkstoff-Pulvern natürlichen oder synthetischen Ursprungs belegen.

Das erfindungsgemäße pulverförmig vorliegende Kationborosulfid enthält Haftvermittler. Der Haftvermittler ist ausgewählt aus der Gruppe der Silikate, Phosphate, Titanate, Aluminate, Phosphonate, Phosphazene, Zirkonate, Silane, Siloxane und Mischung davon, d.h. das Pulver enthält einen oder mehrere Haftvermittler ausgewählt aus der Gruppe Silikate, Phosphate, Titanate, Aluminate, Phosphonate, Phosphazene, Zirkonate, Silane, Siloxane und Mischungen davon.

Vorzugsweise ist das pulverförmig vorliegende Kationborosulfid mit dem Haftvermittler beschichtet.

Bei der Herstellung des erfindungsgemäßen pulverförmig vorliegenden Kationborosulfid wird üblicherweise so vorgegangen, dass beispielsweise Aluminat zugesetzt wird. Wenn der (alternative oder zusätzliche) Haftvermittler anderer Zusammensetzung ist, dann wird der Haftvermittler typischerweise so eingebracht (und das Pulver aus Kationborosulfid vorzugsweise damit beschichtet), indem Precursor-Verbindungen, Sole oder Salzverbindungen eingesetzt werden.

Beispielhafte Precursor-Verbindungen für erfindungsgemäß eingesetzte Haftvermittler sind:
- Titanoxychlorid (TiOCl₂),
- Titantetrachlorid (TiCl₄),
- Siliziumtetrachorid (SiCl₄),
- Lithiumaluminat (LiAl(OH)₄),
- Lithiumsilikat (Li₄SiO4),
- Kaliumsilikat (K₄SiO4),
- Kaliummethylsilikat (K₃CH₃SiO4),
- Zirkonoxychlorid (ZrOCl₂),
- Zirkonpropinat,
- Zirkonphosphat,
- Zirkongluconat,
- Calciumphosphat oder Apatite,
- Boehmit,
- Monoaluminiumphosphat,
- Zementslurries jeder Art,
- Magnesiumchlorid, Magnesiumhydroxid,
- 2,2-(Bis-2-propenolatomethyl)butanolato-tris(neodecanolato-*O*)-Zirconium(IV),
- 2,2-(Bis-2-propenolatomethyl)butanolato-tris((dodecyl)-benzolsulfonato-O)-Zirconium(IV),
- 2,2-(Bis-2-propenolatomethyl)butanolato-tris((dioctyl)-phosphato-O)-Zirconium(IV) und
- 2,2-(bis-2-propenolatomethyl)butanolato-tris-(2-methyl-2-propenoato-*O*)-Zirconium(IV).

In allen Ausführungsformen der Erfindung ist bevorzugt, dass als Haftvermittler Aluminat eingesetzt wird, wobei das Aluminat vorzugsweise ein Lithiumaluminat ist.

Eine typische Menge des einen oder der mehreren Haftvermittler (ausgewählt aus der Gruppe bestehend aus Silikate, Phosphate, Titanate, Aluminate, Phosphonate, Phosphazene, Zirkonate, Silane, Siloxane und Mischungen davon) in dem pulverförmig vorliegenden Kationborosulfid (erfindungsgemäßen Pulver) ist 0,01-45 Gewichtsprozent an Trockenfestkörper, vorzugsweise 0,5-15, Gewichtsprozent Trockenfestkörper, bezogen auf die Masse des einzusetzenden Kationborosulfid und im Besonderen 0,75-10, Gewichtsprozent Trockenfestkörper, bezogen auf die Masse des einzusetzenden Kationborosulfid.

Die Herstellung der erfindungsgemäßen Pulver erfolgt nach dem Stand der Technik durch Pulversynthese, Mahlprozess, oder durch Verfahren wie physikalische oder chemische Gasphasenabscheidung (PVD oder CVD). Dabei können die Oberflächenspannung senkende Substanzen eingesetzt werden, wie aus dem Bereich der Tenside, Öle, Emulgatoren, Fluorpolymere oder andere.

Das erfindungsgemäße Pulver kann also zusätzlich zu Kationborosulfid und den oben beschriebenen Haftvermittler weitere organische wie anorganische Bestandteile enthalten, damit auch weitere Haftvermittler anorganischer oder organischer Verbindungen.

Die zweite Facette der Erfindung betrifft ein Verfahren zur Herstellung des erfindungsgemäßen pulverförmig vorliegenden Kationborosulfid, bei dem:
a) im ersten Schritt eine Fällungsreaktion durchgeführt wird,
b) eine Autoklaven-Behandlung zur Stabilisierung erfolgt,
c) das entstandene Kationborosulfid in Anwesenheit des Haftvermittlers auf gewünschte Zielgröße falls noch nicht gegeben vermahlen wird,
d) das Mahlprodukt nun einer Trocknung (vorzugsweise Sprüh- oder einem Gefriertrocknen) unterworfen wird,
um das pulverförmig vorliegende Kationborosulfid zu erhalten.

In einer weiteren Facette betrifft die Erfindung eine Suspension oder kolloidale Lösung, die umfasst:
a) die unter c) vorliegende Lösung, oder
b) ein Suspensionsmittel, ein Lösemittel oder ein Sol und das erfindungsgemäße pulverförmig getrocknete vorliegende Kationborosulfid.

Dabei ist bevorzugt, dass die Suspension als Suspensionsmittel ein oder mehrere Lösemittel ausgewählt aus Wasser, Glykolen und Kohlenwasserstoffen umfasst,
wobei das Suspensionsmittel vorzugsweise ein oder mehrere Lösemittel ausgewählt aus Wasser, Naphtha und Ethylen-Glykol umfasst. Insbesondere bevorzugt ist das Suspensionsmittel der erfindungsgemäßen Suspension ausgewählt aus Wasser, Ethylen-Glykol und Mischungen derselben.

Die vierte Facette beschreibt die Verwendung der Erfindung des erfindungsgemäßen pulverförmig vorliegenden Kationborosulfid oder der erfindungsgemäßen Suspension für die fungizide, biozide und insektizide Ausrüstung im Sinne eines Ersatzstoffes in organischen oder anorganischen Bindemitteln, Lackhalberzeugnissen und Beschichtungsstoffen aller Art.

Auch proklamiert die Schrift die Verwendung in Materialien wie die der synthetischen oder natürlichen Werk- und Baustoffe aus Lignin, Chitin, Proteinen, Seide, Leimen, Klebern, Kunststoffen aller Art, Polymerkompositen, Kohlenstoff-basierten Bauteilen, Beton, Betonersatzstoffen, Teer- und Asphaltmischungen, anorganischen oder hybridbasierenden Beschichtungsstoffen, Textilien, Glas, Keramik, Glaskeramik, Metallen, Metall- oder Salzschmelzen, insbesondere auch zur fungiziden Ausrüstung von Hölzern aller Art oder Beschichtungen im Sinne eines Verfahrens das die Alterung des Werkstoffes Holzes oder ähnlicher Stoffe verlangsamt.

In einer weiteren Ausführungsform der vierten Facette betrifft die Erfindung die Verwendung des erfindungsgemäßen pulverförmig vorliegenden Kationborosulfid oder der erfindungsgemäßen Suspension oder kolloidalen Lösung die Realisierung und Nutzung von Photokatalytischen und Pyroelektischen Beschichtungen oder Vollbauteile aus dem selbigen Material. Hier gilt besonders die Anwendung als algizider Fassadenschutz, die Herstellung von Anti-Eis-Beschichtungen, die Herstellung von Thermosensoren, Thermogeneratoren in einer großflächigen Nutzung, sowie die Nutzung als alternatives Solarzellenmaterial, alternativer Elektronenspeicher, Sekundärbatterien, Elektrolyten und Elektroden.

In einer weiteren Ausführungsform betrifft die vierte Facette der Erfindung die Verwendung des erfindungsgemäßen pulverförmig vorliegenden Kationborosulfid oder der erfindungsgemäßen Suspension oder kolloidaler Lösung in einem Katalysator zur Veränderung von NOX in der Luft oder in Abgasen aller Art, in einem CO-Absorber, in einem neutronenabsorbierenden und strahlenschützendem Voll-Material oder vergleichbarer Beschichtung, in einem Schmiermittel, in Spezialgläser, in Laserkristallen, in einem Pflanzenschutzmittel, in einem Pflanzendünger, in medizinischen Klebern, in Immobilisierungsmassen, Filter zum Absorbieren von Schwermetallen und Wärmespeicher Materialien.

Die Suspension oder die kolloidale aus dem hergestellten Material kann bei der Verarbeitung als Konzentrat oder als gebrauchsfertige Lösung zu einer Imprägnier-Lösung zum Schutz des zu behandelnden Untergrunds, welche wässrige Medien aufnehmen kann, verarbeitet werden. Die Anwendung erfolgt durch dem Fachmann bekannte handwerkliche Verfahren wie Streichen, Tauchen, Spritzen einerseits oder durch industrielle Verfahren andererseits wie der Vakuumtränkung, der Kessel-Druckimprägnierung oder andere.

Die Suspension oder kolloidale kann als werkstoffspezifischer Verfestiger dienen und eine Barriere gegen Feuchte aufbauen.

Die Konzentrate oder Gebrauchslösungen können je nach Lösemittelbasis der Suspension mit in wasserlöslichen oder in aliphatischen Kohlenstoffen löslichen Pigmentpräparationen eingefärbt werden. Eine Zugabe von Wachs-, Silikon- und/oder Acrylatdispersionen zur Erzielung einer wasserabweisenden Wirkung oder Verbesserung der Fixierung ist ebenfalls möglich.

Die Suspension kann als Konzentrat
- in bindemittelhaltige wasserbasierte sowie in lösemittelbasierte Systeme (Imprägnierungen, Grundierungen, Lasuren) eingearbeitet werden oder
- in wasserbasierte sowie in lösemittebasierte Leimpräparationen eingearbeitet werden.

Bei der Verwendung von organischen Bindemitteln bzw. Dispersionspolymeren kommen handelsübliche Reinstoffe oder Hybride aus dem Bereich der Acrylate, Polyurethane, Polyvinylacetate, Proteinhaltige, Polysulfide, Glucosebasierte, Epoxide, Fluorpolymeren, Öle, Casein, Zellulose, Leime sowie soja- und leinölbasierte Alkydharze einerseits zum Einsatz, andererseits werden aus dem Bereich der anorganischen Bindemittel Stoffe wie Alkali-Wassergläser, Zementmischungen aller Art, Zement-oder Betonersatzmischungen aller Art, Aluminate, gebrannter Kalk, Anhydrit, Ettringit, Polyphosphate, Phosphazene, Metalloxid-Sole und Salzmischungen oder andere verwendet. Die Einsatzmenge kann zwischen 0,1 - 95 Gew.-% betragen, vorzugsweise aber im Bereich von 1 - 55 Gew.-%.

Die Suspension oder kolloidale Lösung kann jeweils gemeinsam mit anderen handelsüblichen Chemikalien oder Stoffen zur Funktionalisierung, welche im jeweiligen Bereich Verwendung finden, zur Wirksamkeitssteigerung gemischt werden, insofern eine Verträglichkeitsprüfung dies zulässt. Im Bereich des Schutzes von Holz oder Leder oder Konservierungsmittel sind dies im Beispiel:
- 3-Iod-2-propinylbutylcarbamat,
- (+)-1-[2-(2,4-Dichlorphenyl)-4-propyl-1,3-dioxolan-2-yl-methyl]-1H-1,2,4-triazol oder
- m-Phenoxybenzyl-3-(2,2-dichlorvinyl)-2,2-dimethylcyclopropancarboxylat
- Permethrin
- Terpene aller Art
- Benzoate
- Sorbate
- Proteine aus Pilzen oder andere wie Polymilchsäure
- Chitosan (Suspension des zermahlenen Panzers des Rotkrebses)
- Ammoniumphosphate

Die Suspension oder kolloidale Lösung kann mit weiteren beliebigen Füllstoffen und/oder Pigmenten organischer und/oder anorganischer Natur versetzt werden.

Die Vorteile der vorliegenden Erfindung und die erfinderische Höhe ergeben sich insbesondere aus den nachfolgenden Beispielen und den beschriebenen Messergebnissen. Prozentangaben beziehen sich - wenn nicht anders angegeben - auf das Gewicht.

### Beschreibung eines Beispiels

Nachfolgend wird die erfindungsgemäße Herstellung des erfindungsgemäßen Pulvers und einer daraus hergestellten erfindungsgemäßen Suspension bzw. kolloidaler Lösung beschrieben. Dies erfolgt anhand eines ausgewählten typischen Beispiels in beispielhafter ausführlicher Form. Die im Anschluss aufgeführten Messergebnisse verschiedener Pulver untermauern die erfinderische Größe und geben einen Ausblick auf die möglichen Einsatzgebiete.

Der entscheidende Hauptreaktand ist die wenig bekannte Borosulfidsäure. Diese entsteht durch das Einleiten von Schwefelwasserstoffgas (zum Beispiel mittels eines Schwefelwasserstoffgenerators) in eine wässrige 10%ige übersättige Borsäurelösung bei einer Temperatur von 65°C +/-2°C. Dabei entsteht anlog der Bildung von Nitriersäure oder Borosulfatsäure die Borosulfidsäure. Dies lässt sich allgemein nach der Formel wie folgt vereinfacht beschreiben:

H₃BO₃ + 2H₂S → HBS₂ + 2H₂0

In einem 1-Liter-Becherglas wurden nun 500 ml einer wässrigen Lösung von Calciumchlorid (40 g / 1; Merck Chemie) und Calciumlactatgluconat (10g / 1; Merck Chemie) auf 70 ° C erhitzt und Stickstoff und Wasserstoff solange zugeleitet bis gerade eine leichte violett-rötliche Trübung die Bildung von Calciumnitridchlorid in Calciumhydridchlorid anzeigte. Nun wurden 200g der hergestellten und noch warmen Borosulfidlösung bei einer Temperatur von 60°C nach und nach unter Rühren innerhalb von 20 Minuten zugegeben bei einer Rührgeschwindigkeit von ca. 700 U / min.

Die erhaltene Lösung wurde 5 Minuten nach Beendigung der Zugabe kontinuierlich eine Stunde gerührt und dann innerhalb von 30 Minuten auf 90°C unter Rühren erwärmt. Als die Temperatur der Lösung 90°C erreichte, wurde die Lösung in einen bei 90°C vorgeheizten 1-Liter-Autoklaven überführt, bei dem die Lösung bei einer Rührgeschwindigkeit von 1000 U / min unter atmosphärischem Druck zunächst für 10 min weitergerührt wurde nach der vorherigen Zugabe von 20g eines 20% Schwefel-Sols. Die Temperatur des geschlossenen Autoklaven wurde im nächsten Schritt auf 240°C erhöht und für 120 min bei einem Innendruck von ca. 2kg/cm² gehalten. Dann wurde die Heizung gestoppt und der Autoklav abgekühlt. Als die Temperatur der Lösung auf 60 ° C abgesenkt wurde, wurde die Lösung aus dem Autoklaven entnommen und ein fester Kuchen aus der Lösung durch Filtration entfernt. Nachdem der Kuchen mit Wasser gespült worden war, bis die elektrische Leitfähigkeit des zur Spülung verwendeten Wassers konstant wurde, wurde der gespülte Kuchen getrocknet mit einer Probenmühle zerkleinert und pulverisiert. Durch den Austausch oder durch das Einbringen weitere Reaktanden zum Beispiel durch die Zugabe von löslichen oder kolloidalen Fluoriden, Nitriden, Phosphaten, Metallsalzlösungen, Metalloxidsolen konnten eine Vielzahl von unterschiedlichen Kationborosulfid Pulver dargestellt werden. Hier seien einige der hergestellten Verbindungen exemplarisch (Tab.1) erwähnt.

**Tab.1 (Probenbeispiele der erfindungsmäßigen Zusammensetzung)**

| **Nr.** | **Probenbeispiele** | **Korngröße nach Autoklav** | **Korngröße nach der Vermahlung** | **Empfohlener Haupteinsatz als** |
|---|---|---|---|---|
| | **Normierte Summen-formel** | **als d90-Wert** | **als d90-Wert** | |
| **1** | Fe_{0,2}B_{0,8}S₂ | < 6,7µm | < 0,3µm | Bakterizid |
| **2** | Ca_{0,26}B_{0,74}S₂ | < 15,2µm | < 0,18µm | Fungizid & Antibiotika |
| **3** | Li_{0,1}Ca_{0,35}B_{0,55}S_{1,99}F_{0,01} | < 9,7µm | < 0,2µm | Insektizid |
| **4** | Ce_{0,22}W_{0,47}B_{0,32}S₂ | < 3,1µm | < 0,08µm | Photokatalytisch wirksames Algizid |
| **5** | Mo_{0,71}B_{0,29}S_{1,81}0_{,009} | < 1,1 µm | < 0,1µm | Photokatalytisch wirksames Algizid |
| **6** | Li_{0,2}Nb_{0,1} Ca_{0,31} B_{0,39}S_{1,8}N O_{0,2} | < 2,7µm | < 0,06µm | Pyroelektrisch wirkender Thermogenerator |
| **7** | Ba_{0,3}Bi_{0,2}B_{0,5}S₂ | < 1,5µm | < 0,28µm | Strahlenabschirmung |

Die entsprechenden Pulver wurden dann im bekannten Top-down-Verfahren in kolloidale Lösung überführt. Es folgt an dieser Stelle exemplarisch dargestellt die Weiterverarbeitung von Probe 2 (Tab.1)

Folgenden Materialien kamen hier zum Einsatz:
- Peptapon 52 (nichtschäumender Suspensionsstabilisator, Zschimmer & Schwarz GmbH & Co. KG, Lahnstein, Deutschland),
- Strodex PK 90 (Phosphonatzubereitung, Ashland Industries Europe, Schaffhausen, Schweiz),
- Tego Dispers 752 (Pigment-Netz- und Dispergieradditiv, Evonik Industries AG, Essen, Deutschland),
- Texanol (Esteralkohol, Eastman, Kingsport, Tennessee, USA),
- Tego Airex TM 825 (Entschäumer und Entlüfter, Evonik Industries AG, Essen, Deutschland),
- Tividia 2500 (Lösung eines nichtionischen Fluro-Acryl-Copolymers, Merck Chemie, Darmstadt, Deutschland)
- Lithiumalumniat (LiAlO₂ als Haftkoppler von Alfa Aesar, Karlsruhe, Deutschland)
- Kings Gold 95 Zirconia Beads 1-1,4mm (Zirkonoxidmahlkörper als Haftkoppler von Triconor, Soest, Niederlande)

Das im Autoklaven gewonnene Pulver mit einem d90-Wert von ca. 15,2 µm wurde nach dem Trocknen bis zur Gewichtskonstanz bei 110°C +/-5°C in eine konventionelle Perlmühle der Fa. Netzsch Mahlfeintechnik Modell PE075 überführt und dort 1 h lang nach folgendem Masse-Versatz gemahlen (Tab. 2).

**Tab. 2 (Versatzkomponenten bei der Vermahlung von Probe 2)**

| **Komponenten** | **Gewichtsanteile in %** |
|---|---|
| Pulverprobe 2 | 15 |
| Wasser | 73 |
| Peptapon 52 | 0,25 |
| Strodex PK 90 | 2,75 |
| Tego Dispers 752 | 8 |
| Lithiumaluminat | 0,5 |
| Tividia 2500 | 0,2 |
| Texanol | 0,1 |
| Tego Airex 825 | 0,2 |

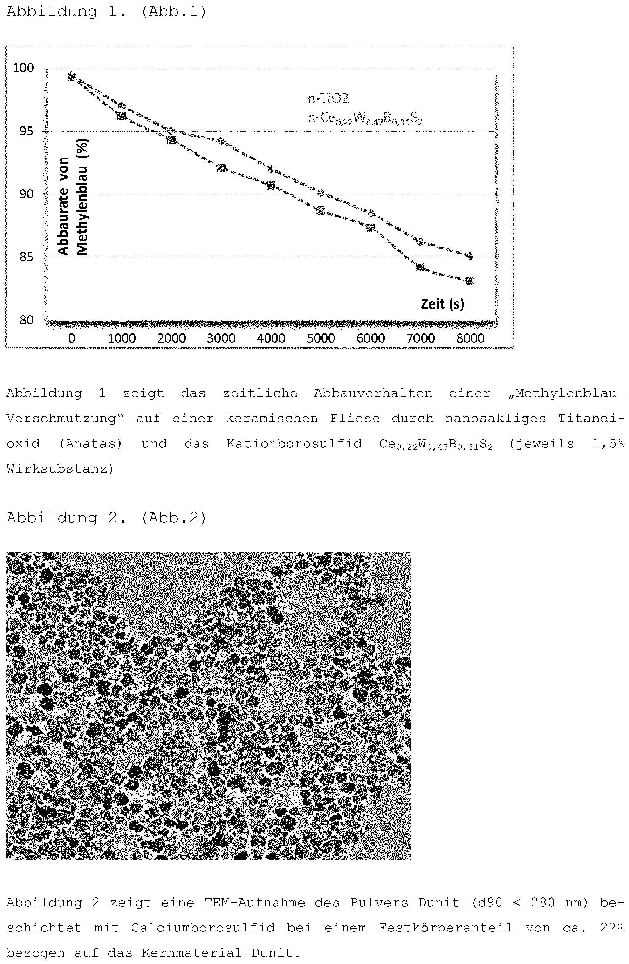

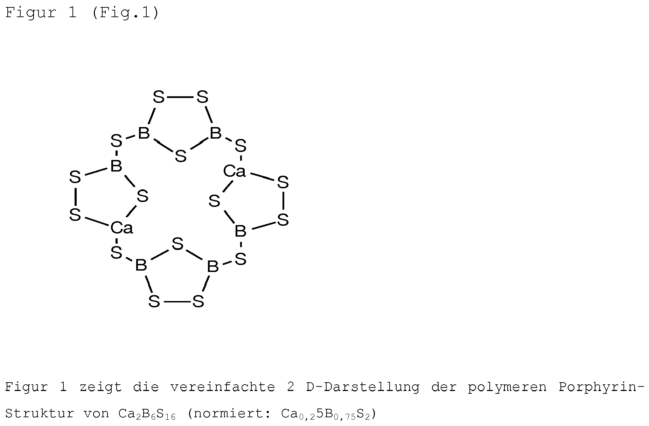

Die erhaltende kolloidale Lösung hatte einen Wirksubstanzanteil von ca. 15% und eine Korngröße von d 90 < 0,18µm. In einer Raman Infrarotspektroskopie konnte eine typische polymere Ringstruktur mit einer π-Elektronenkonfiguration nachgewiesen werden. Die Struktur kann in wie in Figur 1 (Fig.1) vereinfacht als 2-D-Model dargestellt werden.

### Messergebnisse

### Einsatz als Insektizid

Das Ziel der erfindungsmäßigen Zusammensetzung sollte unter anderem die Darstellung eines kennzeichnungsarmen Materials sein, dass nun speziell staatenbildende Insekten wie Ameisen oder Termiten dazu verleitet bestimmte mit der erfindungsmäßigen Zusammensetzung präparierte Baustoffe (= potentielle Siedlungsräume) zu meiden. Eine aktive Tötung durch einen Giftmechanismus sollte dabei primär nicht stattfinden.

Diese Erkenntnisse ließen sich durch Beobachtungen in sogenannten Ameisenfarmen nachweisen. Ein solches Formicarium ist ein Behälter oder eine Anlage aus Behältern zur Beobachtung und Haltung von Ameisen. Es ist daher ein spezielles Terrarium, das den Lebensraum einer Ameisenart nachbildet. Um den Einfluss der erfindungsmäßigen Zusammensetzung auf staatenbildenden Insekten wie der von Ameisen nachzuweisen, wurden verschiedene Terrarien gebaut, in denen die Füllung (=Erde-Sand-Gemisch) mit und ohne Tränkung der erfindungsmäßigen Zusammensetzung erfolgte.

Das Urmuster eines Formicarium, das auch als Nullprobe angesehen wurde, sah wie folgt aus.

Es diente ein fünfseitiger Glasbehälter der Ausmaße 75cm x 7cm x 50 cm. Auf einen Deckel wurde bewusst verzichtet. Als Befüllung wurde nun folgende Mischung gewählt: 75 Masseprozent Bausand der Korngröße bis 1,5mm, 20 Masse Prozent Gartenbauerde und 5 Masseprozent Vulkanasche. Das Gemisch wurde in einem Knetaggregat mit 8 % Wasser und 2% einer Mischung bestehend aus 50% Dextrin, 20% Gummi Arrabicum, 20 % Xanthan Gum und 10 % technisches Glycerin eine Stunde kräftig vermengt. Diese Mischung wurde unter leichtem Stampfen zu etwa drei Viertel in das Glasgefäß gefüllt. Im dem unterem Drittel der Anordnung wurde ein kleiner Hohlraum geformt, in dem ein kommerziell erhältliches Neströhrchen mit einer Ameisenkönigin einer europäischen Waldameise deponiert wurde. Die Oberfläche der Sandmischung zum Deckel hin wurde mit einem Gemisch aus Tannennadeln und Rindenmulch locker bedeckt. Das Formicarium wurde bei Raumtemperatur gelagert und mit einer Terrarium-Lampe 9 h am Tag von oben angestrahlt. Die durchschnittlich gemessene Oberflächentemperatur wurde so auf ca. 20-24°C eingestellt. Im Abstand von drei Tagen wurde die Oberfläche regelmäßig per Sprühflasche angefeuchtet. Etwas Nährlösung für die Ameisen wurde jeweils mit in das Sprühwasser gegeben.

Im Laufe von ca. 6-7 Wochen konnte man eine deutliche Populationszunahme der Tierchen beobachten. Eine deutliche Anzahl von Tunneln entstand im Terrarium. Hierbei wurde kein Raum bevorzugt oder abgelehnt, sondern es ergab sich ein statisch verteiltes Bild. Nach ca. 8 Wochen wurde die Population so groß, dass die Ameisen die Grenzen ihres Wohnraums mehr und mehr verließen.

Nach der Beobachtung der oben beschriebenen Nullprobe wurden nun mehrere andere Terrarien gleichen Ausmaßes angelegt und beobachtet. Hier gab es allerdings folgende Unterschiede zur der oben beschriebenen Nullprobe.

Es wurde nun ein Volumenviertel des Terrariums (ca.25cmx7cmx20vm) mit einer präparierten Erde-Sand-Mischung gefüllt. Ein Teil der obigen Füllmischung wurde hierzu zusätzlich mit einer 10% Suspension unterschiedlichen Proben der erfindungsmäßigen Zusammensetzung befeuchtet (Zusatzfeuchte betrug ca. 5-7 %). Somit waren 3 Viertel des Lebensraums mit der der Nullprobe identisch und 1 Viertel war nun mit der erfindungsmäßigen Zusammensetzung präpariert. Ein leichtes Einfärben mit roter Lebensmittelfarbe des Sandes in diesem Bereich ließ sehr gut den Unterschied zur übrigen Mischung erkennen.

Für die Bewertung der erfindungsmäßigen Zusammensetzungen in Hinblick auf das Entwicklungsverhalten von Ameisen wurden nun folgende Prüfwerte aufgestellt (Tab.3). Diese beziehen sich auf den Bau von deutlich sichtbaren Gängen und Tunneln im beschichteten Volumen-Bereich. Die Abgabe der unten angegebenen Bewertungszahl erfolgte an dem Tag der "Überpopulation", also ab dem Zeitpunkt, an dem die Tiere das verstärkte Interesse zeigten den Glasbehälter zu verlassen.

**Tab. 3 (Bewertungskriterien "Tunnelbau")**

| | |
|---|---|
| **Bau von gar keinen Tunneln im beschichten Bereich und in einem Umkreis von 5 cm** | **0** |
| **Bau von gar keinen Tunneln im beschichten Bereich, aber in dem Umkreis von 5 cm** | **1** |
| **Bau von 1-2 Tunneln im beschichten Rand-Bereich** | **2** |
| **Bau von 1-2 Tunneln im beschichten Hauptbereich** | **3** |
| **Bau von 3-4 Tunneln im beschichten Hauptbereich** | **4** |
| **Bau von vielen Tunneln im beschichten Hauptbereich** | **5** |

Für einige Proben der erfindungsmäßigen Zusammensetzung ergaben sich nun folgende Bewertungszahlen (Tab.4), als Mittelwert aus jeweils drei Versuchswiederholungen:

**Tab.4 (Bewertung für verschiedene Verbindungen)**

| | **10% Suspension bzw. kolloidale Lösung** | **Bewertungs zahl** |
|---|---|---|
| VergleichsBeispiel 1 | FeS₂ d90 < 40µm | **5** |
| VergleichsBeispiel 2 | FeS₂ d90 < 1,5µm | **4-5** |
| VergleichsBeispiel 3 | FeS₂ d90 < 0,2µm | **4** |
| **Probe 1** | **Fe**_{0,2}**B**_{0,8}**S**₂ **< 0,3µm** | **2** |
| **Probe 2** | **Ca**_{0,26}**B**_{0,74}**S**₂ **< 0,1µm** | **1-2** |
| **Probe 3** | **Li**_{0,1}**Ca**_{0,35}**B**_{0,55}**S**_{1,99}**F**_{0,01} **< 0,2µm** | **0-1** |
| **Probe 4** | **Li**_{0,1}**Ca**_{0,35}**B**_{0,55}**S**_{1,99}**F**_{0,01} **d90 < 0,2µm plus 5 % Chlorophyll** | **0** |

Insgesamt zeigte sich eine normale Entwicklung der Population der Tiere. Allerdings wurde der beschichtete Bereich als Lebensraum je nach Zusammensetzung mehr oder minder stark bis ganz gemieden. Da sich nun auch die Rate der sterblichen Tiere nicht erhöhte, wurde der Glasbehälter ca. 1-3 Wochen früher verlassen. Die erfindungsmäßigen Zusammensetzung sorgte also nicht für ein Abtöten der Tiere, wie es im klassischen Sinne eines Insektizides zur verstehen ist, sondern sie vermieden jenen Bereich, in dem eine Beschichtung vorlag. Dieses Gebiet wurde nicht als Lebensraum genutzt.

Mit der oben beschrieben Probe 4 wurden noch weitere Versuche durchgeführt, und zwar eine Verdünnungstestreihe von 10% auf 5% und 1%. Im Laufe von ca. 6 Wochen entstand in allen Fällen eine normale Population mit mehr Neutieren als Todtieren. Was auffiel, dass bei der 10% und 5 % Behandlung gar keine Tunnel in der beschichteten Erde-Sand-Mischung angelegt wurden. Bei der 1% Mischung entstand ein ganz winziger Gang im kompletten beschichteten Bereich. Hier war also der Effekt nicht mehr so stark ausgeprägt.

Es wurden nun noch weitere Versuche durchgeführt, indem die Füllmischung komplett mit Probe 4 imprägniert wurde. Bei einer Konzentration von 1,5 % bis 5 % erwuchs nun keine echte Kolonie. Vielmehr gab es nach ein paar Tagen nur die Sichtung von wenigen Tieren. Die Königin war sogar nach einer Woche verschwunden. Bei der zweifachen Wiederholung des Versuchs ergab sich jedes Mal das gleiche Bild. Bei einer Konzentration von 1 % entstand eine kleine Ameisenkolonie, die nach 2 Wochen das Glasgefäß komplett mit Königin verlassen wollte. Der zur Verfügung gestellte Bereich wurde somit als Lebensraum abgelehnt.

### Einsatz als photokatalytisch wirkendes Material

Es erfolgte die Bestimmung der photokatalytischen Luft- und Selbstreinigungswirkung einer photokatalytisch funktionalisierter Oberfläche mit der erfindungsmäßigen Zusammensetzung. Dies erfolgte gemäß der ISO- Normprüfverfahren "Abbau von Methylenblau" (ISO 10678) und "Entfernung von Stickstoffmonoxid" (ISO 22197-1) .

ISO 10678 beschreibt eine Standardprüfmethode zur Bestimmung der photokatalytischen Selbstreinigungswirkung von flachen, nicht porösen Oberflächen. Methylenblau wird in wässriger Lösung mit der photokatalytisch aktiven Oberfläche eines Prüfkörpers in Kontakt gebracht und mit UV-Strahlung (320 nm bis 400 nm) bestrahlt. Dabei wird die Lösung entfärbt und der Farbstoffgehalt der Lösung während des Messverlaufs mehrfach mittels UV-Vis-Spektroskopie bestimmt. Parallel wird in einem zweiten Gefäß eine Referenzmessung an einer identischen Probe durchgeführt, dessen Oberfläche gegen die Bestrahlung abgeschirmt ist. Aus den Messungen werden die spezifische Abbaurate und die Photoneneffizienz der Oberfläche berechnet.

ISO 22197-1 beschreibt ein Verfahren zur Bestimmung des Luftreinigungsvermögens photokatalytischer Werkstoffe, bei dem der Prüfkörper unter Bestrahlung mit UV-Licht dauerhaft mit einem Modellschadstoff verschmutzter Luft in Kontakt steht. Als typischer Luftschadstoff wird hierbei Stickstoffmonoxid (NO) gewählt, das nicht- flüchtige Produkte auf dem Photokatalysator erzeugt. Der Prüfkörper wird in einem durchströmten Photoreaktor platziert und durch UV-Strahlung aktiviert, so dass er gasförmiges NO adsorbiert und oxidiert, wodurch sich Salpetersäure (oder Nitrat) an seiner Oberfläche bildet. Ein Teil des NO wird auf dem Prüfkörper in Stickstoffdioxid (NO₂) umgewandelt. Das Luftreinigungsvermögen wird anhand der Nettomenge der entfernten Stickoxide ermittelt (NOₓ) (= entferntes NO - gebildetes NO₂).

Als Prüfkörper wurden kleine glasierte keramische Wand-Fliesen der Abmaße 30x30x8mm beschichtet. Die Beschichtungslösung bestand aus der erfindungsmäßigen Zusammensetzung Ce_{0,22}W_{0,47}B_{0,31}S₂ mit einer Wirkkonzentration von 1,5% in Wasser dem noch 0,5 % Kaliummethylsilikat als Haftgrund zugesetzt wurde. Die Überbeschichtung wurde bei 40°C +/- 2°C für 8h im Trockenschrank gelagert und vor dem Beleuchtungsversuch mit einem Stoffflies bedeckt. Um eine Vergleichsprobe zu erhalten, wurde der Versuch mit einem handelsüblichen nanoskaligen Titandioxid der Anatas-Variante wiederholt (Wirkkonzentration von 1,5%). Danach erfolgte die Prüfung mit folgenden Prüfbedingungen (Tab.5).

**Tab.5 (Prüfmittel /Prüfbedingungen zur Bestimmung der Photokatalyse)**

| **Prüfmittel** | Methylenblau Hydrat, Fluka(CAS: 122965-43-9); Reinheit >97% |
|---|---|
| Vorkonditionierung der Proben | Methylenblau; 20 *h*; 20 *µmol*/*l* |
| UV-Lampe (Vorkonditionierung) Voraktivierung | Philips Actinic BL TL-K 40W; Maximum @ 365 *nm* UV; *72 h;* 1,9 *mW*/*cm²;* kontinu- |
| UV-Detektor | PeakTech 5085, kalibrierte Si-Photodiode |

| **Prüfbedingungen** | |
|---|---|
| Temperatur im Labor | 20±2°C |
| Küvettentyp | Hellma OG Type 704.004 (optische Länge 60 *mm*) |
| Volumen der Testlösung | 120 *ml* |
| Konzentration der Lösung | 10,0 *µmol*/*l* |
| Dauer der Messung | 180 *min* |
| UV-Lampe (Messung) | Sylvania Blacklight blue 15 *W;* Maximum @ 350±20 *nm* |
| Bestrahlungsbedingungen | 180 *min;* 1,02 *mW*/*cm²;* kontinuierlich |
| UV-Detektor | Ophir Thermopile-Sensor 3A-P-FS-12 |
| UV-VIS-Spektrometer | Ocean Optics USB650 in Kombination mit Ocean Optics HL-2000-FSH Halogenlampe |

Das Ergebnis wird in Tab. 6 wie folgt aufgeführt:

**Tab.6. (Photokatalytische Aktivität)**

| | **Bestrahlte Fläche *A* [m²]** | **Photonen-bestrahlungsstarke *Ep* [µmol/m²h]** | **spezifische Aktivität *PMB* [µmol/m²h]** | **Photoneneffizienz ζMB [%]** | **Numerischer Fehler** |
|---|---|---|---|---|---|
| Probe | | | | | **ΔζMB [%]** |
| n-Tio2 | 1,25E-03 | 109841,82 | 22,5 | 0,0201 | ±0,0005 |
| Erfindungsmäßige Probe | 1,25E-03 | 109841,82 | 32,4 | 0,0308 | ±0,0005 |
| keine Beschichtung | 1,25E-03 | 109841,82 | 1,4 | 0,0003 | ±0,0005 |

Es war damit deutlich zu erkennen, dass die erfindungsmäßige Zusammensetzung photokatalytisch wirkt und vergleichbar bzw. noch besser ist als bisherige Mittel, die auf der Basis von nanoskaligen Titandioxid formuliert sind (siehe auch Abbildung 1). Da diese Mittel auch Stickstoffoxide der Luft katalytisch umwandeln und somit auch im Temperaturbereich bis ca. 700°C als DeNOx-Katalysatoren zur Abgasreinigung Anwendung finden, lag hier der Schluss nahe, den Vergleich zu den bisherigen üblichen Stoffen wie nanoskaliges Anatas auszutesten. Das Verhalten zu NOx wurde unter folgenden Prüf-Parametern betrachtet (Tab.7).

**Tab.7 (Prüfmittel / Prüfbedingungen zur Bestimmung des NOx-Abbaus)**

| | |
|---|---|
| **Testmethode** | ISO 22197-1:2007 |
| | Prüfverfahren zur Bestimmung des Luftreinigungsvermögens von halbleitenden photokatalytischen Werkstoffen |
| | Teil 1: Entfernung von Stickstoffmonoxid |
| | |
| **Prüfmittel** | Stickstoffmonoxid (NO), Linde AG, Art.-Nr.: 3800152, 50 *ppmv*; |
| | Synthetische Luft (SA), Linde AG, Art.-Nr.: 10207951, CH-frei |
| UV-Lampe (Vorkonditionierung) | Philips Actinic BL TL-K 40W; Maximum @ 365±10 *nm* |
| Voraktivierung | 365 *nm* UV; 24 *h;* 1,9 *mW*/*cm²*; kontinuierlich |
| UV-Detektor | PeakTech 5085, kalibrierte Si-Photodiode |
| Vorkonditionierung der Proben | Deionisiertes Wasser; 2 *h*; Trocknung mit Stickstoff 5.0 |

| Prüfbedingungen | |
|---|---|
| Temperatur im Labor | 24±2 °*C* |
| Temperatur im Reaktor | 21±2°*C* |
| Luftfeuchtigkeit im Reaktor | 50±1% RH |
| Testgasfluss | 1 *ppmv* Stickstoffmonoxid in Technischer Luft; *1*/*min* |
| UV-Lampe (Messung) | FSLED365.10_10, LED-basierter Flächenstrahler, 10 x 10 cm, Omicron-Laserage Laserprodukte GmbH, 365 *nm,* 1,00 *mW*/*cm²* |
| UV-Detektor | Ophir 3A-P-FS-Thermosäule (Nova II), Ophir Spiricon Europe GmbH |
| NO-Analysator | AC32M Chemilumineszenz-Detektor, Environnement S.A. |

Folgendes Ergebnis ergab sich bei dieser Prüfung (Tab.8)

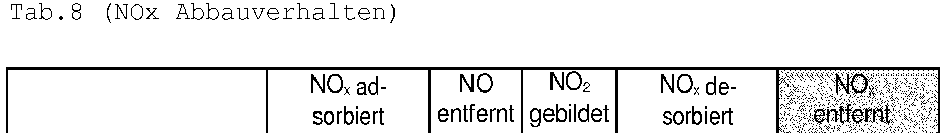

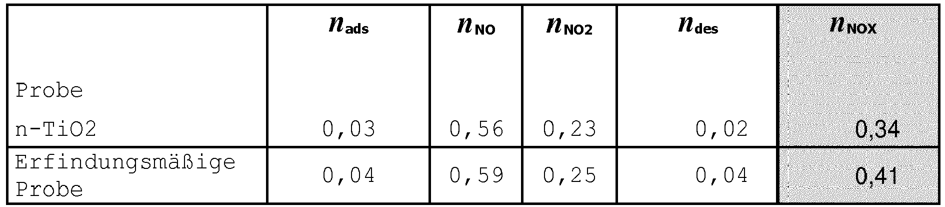

Die erfindungsmäßige Zusammensetzung hat im Vergleich zu nanoskaligen Titandioxid ein verstärktes Vermögen NOx zu wandeln und ist somit als DeNox-Material verwendbar.

### Reaktion als antibiotisches Mittel

Zellmembranen (auch Plasmamembran, intrazelluläre Membran) bestehen aus Lipiden und Proteinen. Das Gewichtsverhältnis kann je nach Membrantyp zwischen 4:1 und 1:4 variieren. Die Lipide bauen eine Lipiddoppelschicht auf, in die Proteine eingelagert sind: als integrale Proteine, die sich quer durch die Membran erstrecken oder in die eine Membranhälfte eingelagert sind, und als periphere Proteine, die an die Membranoberfläche angelagert sind. Die Membranlipide sind Phospholipide, Glykolipide und Cholesterin (neutrales Lipid). Die unterschiedlichen Lipide kommen in unterschiedlichen Membrantypen in unterschiedlichen Gewichtsanteilen vor. Bei Antibiotika resistenten Bakterien hat es sich gezeigt, dass diese mehrere Schichten speziell aus Glykolipiden als Schutzschicht aufbauen. Einen Mechanismus zu finden, der diesen Aufbau bei der Reproduktion hemmt oder gar stoppt, ist der Schlüssel zur Herstellung neuer Arzneimittel, die solche Superbakterien für den Mensch unschädlich machen. Es hat sich gezeigt, dass die erfindungsmäßige Zusammensetzung nach der molaren Formel Ca_{0,26}B_{0,74}S₂ Glykolipide bindet oder komplexiert. Hierzu kann der einfache Nachweis mit Brom herangezogen werden.

Doppelbindungen in ungesättigten Fettsäuren können durch die Addition von Brom nachgewiesen werden.

Zwei Tropfen einer 1:1 Mischung aus Sphingomyelin und Cerebrosid (typische Glykolipide) wurden in etwa 3 ml Chloroform gelöst und tropfenweise einer 2%-igen Bromlösung zugegeben. Die braune Farbe der Bromlösung entfärbte sich spontan.

Zu der obigen Glykolipidmischung wurde nun die erfindungsmäßige Zusammensetzung nach der molaren Formel Ca_{0,26}B_{0,74}S₂ hinzugetropft und geschüttelt. Nach einer kurzen Verweilzeit von ca. 1 min wurde die Bromprobe wiederholt. Die Entfärbung durch Brom erfolgte je nach Zugabemenge und Konzentration nun eher in unterschiedlicher Form.

Als Bewertungsgröße wurde die Farbveränderung photometrisch bestimmt. Als 100 % galt die starke Bromfärbung (=keine Reaktion), als 0% Punkt wurde die oben beschriebene entfärbte Lösung genommen (=komplette Reaktion).

In der folgenden Tabelle (Tab.9) sind die Messergebnisse dieses Versuchs aufgeführt.

**Tab.9 (Reaktionsverhalten von Brom in Glykolipid/Kationborosulfid)**

| Kolloide Lösung von | Zugabe 10% | Zugabe 5% | Zugabe 1% |
|---|---|---|---|
| Ca_{0,26}B_{0,74}S₂ (10%ig) | 99,89% | 99,72 | 98,1 |
| Ca_{0,26}B_{0,74}S₂ (5%ig) | 96,23 | 93,56 | 86,4 |
| Ca_{0,26}B_{0,74}S₂ (1%ig) | 93,78 | 88,35 | 78,24 |

Die Messergebnisse zeigen, dass die Bromreaktion bei Anwesenheit von dem Kationborosulfid stark unterdrückt bzw. verhindert wurde. Dies kann nur dadurch erklärt werden, dass die Lipidmischung schon vorher mit dem Material der erfindungsmäßigen Zusammensetzung in einer Reaktion gebunden oder umhüllt wurde. Das Brom hatte somit keine Reaktionstellen mehr.

Da diese Reaktion der Lipide mit Brom verhindert wurde zeigt aber an dieser Stelle auch, dass wiederum weitere Reaktionen der Lipide zum Aufbau einer Membran durch Additions- und Polymerisations- Mechanismen ebenfalls gestört werden müssten.

Es wird somit die Synthese der Bakterienzellwand nachhaltig gehemmt, indem die beschriebene Erfindung die Glykolipide, so bindet; als Fazit gilt, dass der potentielle Wirkstoff den Aufbau von Bakterien-Zellwänden behindert. Somit hat man an dieser Stelle einen Wirkmechanismus die Membranbildung der Antibiotika resistenten Bakterien zu unterbinden und könnte diese Arten der resistenten Krankheiterreger erstmals erfolgreich bekämpfen

### Nachweis einer bakteriziden Wirkung

Die Wirksamkeit zum Beispiel als fungizides Mittel wurde mit Hilfe eines in Vitro-verfahrens ermittelt. Dazu wurde eine 5 % Suspension in kleinen Mulden tropfenförmig auf einen 2 Gew.-%igen Malzextraktagar in Petrischalen aufgetragen und mit den Pilzen *Aureobasidium pullulans, Sclerophoma pithyopila, Aspergillus niger* und *Trichoderma viride* (grüner Holzschimmel) beimpft. Anschließend wurden die Schalen 3 Tage lang bei 22 bis 24°C bebrütet. Nach dieser Zeit haben sich die Pilze in den Kontrollschalen sehr gut entwickelt.

Die fungizide Wirksamkeit der Suspension wurde anhand der um die Mulden herum entstandenen pilzfreien Zonen (= Hemmhöfe) wie folgt beurteilt (Tab. 10):

**Tab.10 (Prüfkriterium Hemmhof)**

| | | |
|---|---|---|
| Kein Hemmhof | (6) | keine fungizide Wirksamkeit) |
| Kleiner Hemmhof | (4) | 2mm (geringe fungizide Wirksamkeit) |
| Mittlerer Hemmhof | (2) | 2 bis 6 mm (gute fungizide Wirksamkeit) |
| Großer Hemmhof | (0) | 6 mm (sehr gute fungizide Wirksamkeit) |

Hier sind nun einige der gemessenen Ergebnisse. Als Vergleich ist das natürliche Pyrit (FeS2) als Vergleichschemikalie in unterschiedlicher Korngröße mit aufgeführt (Tab.11).

**Tab.11 (Hemmhof-Ergebnisse)**

| **Zusammensetzungen** | **Hemmhof** |
|---|---|
| FeS₂ d90 < 40µm | 6 |
| FeS₂ d90 < 1,5µm | 4-6 |
| FeS₂ d90 < 0,2µm | 2-4 |
| Fe_{0,2}B_{0,8}S₂ d90 < 0,3µm | 2 |
| Ca_{0,26}B_{0,74}S₂ d90 < 0,18µm | 0 |
| Li_{0,1}Ca_{0,35}B_{0,55}S_{1,99}F_{0,01} d90 < 0,2µm | 0 |

Die Ermittlung der mikrobioziden Wirkung kann auch über die Ermittlung der "Minimalen Hemmkonzentration (MHK)" im Bouillondilutionstest gemäß DIN 58940 bestimmt werden. Als MHK wird dann der Wert angegeben, bei der kein Wachstum von Mikroorganismen nachweisbar ist. Hierzu wurde immer von einer 10%igen Konzentration der kolloidalen Lösung der erfindungsmäßigen Zusammensetzung bzw. Suspension der Vergleichspulver als Messreagenz ausgegangen.

Als Ergebnisse für verschiedene Mikroorganismen sind nun folgende Daten ermittelt worden (Tab.12):

**Tab.12 (Ergebnisse MHK von Sulfiden als Vergleich)**

| Testkeim | MHK in µg/ml | MHK in µg/ml | MHK in µg/ml |
|---|---|---|---|
| | FeS₂ d90 < 40µm | FeS₂ d90 < 1,5µm | FeS₂ d90 < 0,2µm |
| Pseudomonas aeruginosa | 1024 | 512 | 256 |
| Proteus mirabilis | 2048 | 512 | 128 |
| Aspergillus niger | 512 | 256 | 16 |
| Staphylococus aureus | 1024 | 512 | 16 |
| Candida albicans | 512 | 236 | 32 |
| Aureobasidium pullulans | 2048 | 512 | 16 |
| Trichoderma viride | 2048 | 1024 | 256 |
| Sclerophoma pithyopila | 1024 | 512 | 64 |

Im Vergleich hierzu die Daten mit den Materialien der beschriebenen Erfindung (Tab.13).

**Tab.13 (Ergebnisse MHK mit Kationborosulfid)**

| Testkeim | MHK in µg/ml Fe_{0,2}B_{0,8}S₂ d90 < 0,3µm | MHK in µg/ml Ca_{0,26}B_{0,74}S₂ d90 < 0,18µm | MHK in µg/ml Li_{0,1}Ca_{0,35}B_{0,55}S₁,₉₉F_{0,01} d90 < 0,2µm |
|---|---|---|---|
| Pseudomonas aeruginosa | 32 | 16 | 8 |
| Proteus mirabilis | 64 | 16 | 8 |
| Aspergillus niger | 16 | 16 | 16 |
| Staphylococus aureus | 32 | 16 | 8 |
| Candida albicans | 16 | 16 | 8 |
| Aureobasidium pullulans | 16 | 16 | 0 |
| Trichoderma viride | 32 | 8 | 16 |
| Sclerophoma pithyopila | 8 | 8 | 0 |

Die ermittelten Daten zeigen deutlich die bakterizide Wirkung. Hierbei steuern die Korngröße, die Dotierung und der Gehalt an Schwefel sowie an Bor die Intensität, aber auch die Möglichkeit einer selektiven Wirksamkeit.

### Nachweis der Pyroelektrizität

Erfindungsgemäß wird die Pyroelekrizität vorzugsweise durch vergleichende Beobachtung der Vereisung und der Kristallausbildung einer Beschichtung nach dem Schockgefrieren und Herausnehmen aus flüssigem Stickstoff bei ca. minus 200°C bestimmt. Für einen qualitativen Nachweis wird das Pulver oder das Sol eingebettet in einer Beschichtung zum Beispiel auf Stahl und kurz in flüssigen Stickstoff getaucht. Nach der Herausnahme wird dann bei Raumtemperatur beobachtet, wie aus der Feuchtigkeit der umgebenden Luft Eis am kalten Objekt kondensiert. Je länger dies dauert, desto stärker ist die Ausbildung der Thermoelektrizität.

Außerdem gilt: Wenn Ladungen an der Oberfläche verschoben worden sind, bilden sich fadenförmige Eispartikel aus, die den elektrischen Feldlinien folgen. Je länger und deutlicher dabei die Kristallnadel sich ausbilden, desto stärker der Effekt. Ausgehend vom definierten käuflichen Material wie z.B. die des Lithiumniobat (von Alfa Aesar mit einem d90 Wert von ca. 22µm) werden dann vergleichende Messung zur Beurteilung der erfindungsmäßigen Zusammensetzung herangezogen.

Für die Tests bedurfte es eines allgemeinen Beschichtungsansatzes, der auf Edelstahlplatten mit einer Größe von 10cm x 15cm x 0,4cm wie folgt ausgeführt wurde (Tab. 14).

**Tab. 14 (allgemeine Lackzusammensetzung für die Messung der pyroelektrischen Effekte)**

| **Rohstoffbezeichnung** | **Gewichtsprozent %** |
|---|---|
| Nyacol Al20 (von Nyacol) | 4 |
| Buthylgkykol | 2 |
| Wasser | 3 |
| Lopon 890 | 0,1 |
| Siliporite NK 10 AP | 1 |
| Worlee Sol 150 EW | 59 |
| Borchi Aqua Co 7 | 0,3 |
| Tego Airex TM 825 | 0,4 |
| Byk 346 | 0,3 |
| Byk Cloisite 116 | 5 |
| Südranol 199 | 1 |
| Byk 024 | 0,1 |
| Byk 4509 | 3 |
| ***Erfindungsmäßiges Pulver*** | 20 |
| Tafigel Pur 48 | 0,4 |
| Polypropylenglykol | 0,4 |
| Summe | 100,0 |

Das jeweilige Beschichtungsmaterial wurde komplett im Disolver formuliert und danach 1 h in einer herkömmlichen Trommelmühle nachgemahlen. Danach wurde der Lack mit einer Schichtdicke von 120µm +/-5 µm auf die Metallplatten appliziert. Anschließend erfolgte eine Trocknung bei Raumtemperatur über 24 h. Anschließend wurden die Platten 21 Tage im Trockenschrank bei relativer Feuchte von 25% +/- 5% und bei einer Temperatur von 45°C +-5°C gelagert. Unmittelbar vor dem Versuch wurden die Prüfkörper aus dem Trockenschrank genommen und 30 min bei Raumtemperatur belassen. Anschließend wurde die lackierte Metall-Probe in flüssigen Stickstoff -195°C (+/- 15°C) für 5 min eingetaucht. Danach erfolgte die Entnahme und die Beobachtung bei Raumtemperatur (20°C +/-2°C). Je später eine Vereisung erfolgte und je deutlicher eine Feldlinienbildung war, desto ausgeprägter der erwünschte thermoelektrische Effekt. Von jedem Pulver wurden jeweils 10 Edelstahlplättchen gefertigt. Als vergleichende Pulver wurden Lithiumniobat und Lithiumtantalat in verschiedener Korngröße herangezogen. Diese Stoffe gelten im Bereich der anorganischen Mineralstoffe zurzeit als die mit den höchsten pyroelektrischen (thermoelektrischen) Eigenschaften.

Im Folgenden wird die erfindungsmäßige Zusammensetzung hinsichtlich ihrer thermoelektrischen Eigenschaft dargestellt (Tab.15).

**Tab.15 (Messung der Pyroelektrizität nach dem Stickstoff-Schockfrier-Verfahren)**

| **Wirkstoff** | **Korngröße** | **erste Vereisungserscheinung** | **Feldlinien** |
|---|---|---|---|
| | **d90 Wert** | **nach Sekunden (s)** | **sichtbar?** |
| Lithiumniobat | < 40µm | 23 | wenig |
| Lithiumniobat | < 0,6µm | 34 | gut |
| Lithiumniobat | < 0,07µm | 53 | sehr gut |
| Lithiumtantalat | < 0,06µm | 45 | sehr gut |
| Fe_{0,2}B_{0,8}S₂ | < 0,3µm | 19 | wenig |
| Ca_{0,26}B_{0,74}S₂ | < 0,18µm | 23 | wenig |
| Dunit mit Cä_{0,31}B_{0,69}S₂ | < 0,28µm | 29 | gut |
| Li_{0,1}Ca_{0,35}B_{0,55}S_{1,99}F_{0,01} | < 0,2 µm | 25 | gut-wenig |
| Ce_{0,22}W_{0,47}B_{0,31}S₂ | < 0,08µm | 39 | gut |
| Mo_{0,71}B_{0,29}S_{1,81}0_{,009} | < 0,1µm | 37 | gut |
| Li_{0,2}Nb_{0,1}Ca_{0,31}B_{0,39}S_{1,8}N_{0,2} | < 0,06µm | 53 | sehr gut |
| Li_{0, 21}Nb_{0,09}Ca_{0,30}B_{0,4}S_{1,70}F_{0,3} | < 0,08µm | 57 | sehr gut |

Wie man sieht wurde in einem besonderen Fall auf ein vorher zerkleinertes Gesteinsmehl mit einer schwachen halbleitenden Eigenschaft die oben dargestellte Synthese wiederholt und die erfindungsmäßige Zusammensetzung "aufgefällt". Als Ausgangsmaterial dienten 500ml der soligen Gesteinsmehlmischung anstelle von Wasser (siehe Beschreibung eines Beispiels).

Die Herstellung des Gesteinsmehls als Kernmaterial erfolgte dabei wie folgt:
Ein kommerziell erwerbliches Pulver bestehend aus Dunit (=Gesteinsmehl aus dem Mineral Olivin) der Possehl Erzkontor mit einem d90-Wert von ca. 80 µm wurde nach Trocknen bis zur Gewichtskonstanz bei 110°C +/-5°C in eine konventionelle Trommelmühle überführt und dort 4-16 h lang nach folgendem Masse-Versatz gemahlen (Tab. 16):

**Tab. 16**

| **Komponenten** | **Gewichtsteile** |
|---|---|
| Pulver | 100 |
| Wasser | 42 |
| Peptapon 52 | 0,25 |
| Strodex PK 90 | 2,75 |

Je nach Mahlzeit ergab sich folgende Kornverteilung:
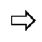 4h: d50 <25,6µm, d90<49,2µm
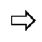 8h: d50 <15,3µm, d90<33,4µm
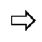 16h: d50 <5,5 µm, d90< 12,1µm

Die so nach 16 h aufbereitete Pulversuspension wurde anschließend in zwei weiteren Stufen weiter zerkleinert. Hierzu wurde die Suspension zunächst mit den unten aufgeführten Prozesshilfsmitteln in einer Planetenkugelmühle der Firma Retsch bei 650 U*min⁻¹ eine Stunde lang zerkleinert (Tab. 17):

**Tab. 17**

| **Komponenten** | **Gewichtsteile** |
|---|---|
| Mahlansatz Trommelmühle | 100 |
| Wasser | 10 |
| Tego Dispers 752 | 2 |
| Texanol | 0,15 |
| Tego Airex 825 | 0,2 |

Dieser Aufbereitungsschritt ließ die durchschnittliche Korngröße unter 1,9 µm sinken. Nach dem Abkühlen der aufbereiteten Pulversuspension erfolgte ein weiterer Mahlschritt (Tab. 18). Hierzu kamen nun auch Feinst-Mahlkugeln (Cerstabilisiertes Zirkonium-Oxid) mit einer durchschnittlichen Korngröße von 0,3-0,4 mm zum Einsatz. Der Kugelfüllgrad lag dabei bei 55 Volumenprozent.

**Tab. 18**

| **Komponenten** | **Gewichtsteile** |
|---|---|
| Mahlansatz Planetenmühle 1h | 100 |
| Wasser | 2 |
| Tividia 2500 | 0,2 |
| Texanol | 0,15 |

In diesem abschließenden Mahlschritt wurden im Abstand von 5 min Proben genommen. Nach etwa 45 min ergab sich kaum eine weitere Veränderung in der Korngröße. Der dritte Schritt dauert somit 60 min bei 700 min⁻¹ in der genannten Planetenmühle.

Das erfindungsgemäße Pulver hatte demnach eine Korngröße von ca. 38 nm (d50-Wert)und ca. 165 nm (d90-Wert) und einen Top Cut von 380nm.

Nach dem obigen Beschichtungsvorgang war nun die Korngröße d90 < 280nm mit der Oberflächenbelegung eines Kationborosulfid der ungefähren Zusammensetzung von Ca0,₃₁B_{,69}S₂ bei einem Festkörperanteil von ca. 22% bezogen auf den Dunitanteil.

Dieses Pulver war dem reinen Calciumborosulfid bei ähnlicher Kornverteilung in seiner pyroelektrischen Eigenschaft sogar leicht überlegen. Somit war bewiesen, dass auf diese Weise - mit einem Core-Shell-Verfahren - sich nun sehr günstige Pulver herstellen lassen, indem frei verfügbare vergleichbar billige mineralische Pulver als Ausgangsrohstoff verwendet werden.

Die Nutzung von wirtschaftlich günstig herzustellenden Materialien mit einer ausgeprägten thermoelektrischen Eigenschaft führt nun zu interessanten Möglichkeiten: die Herstellung von Anti-Eis-Beschichtungen auf einer Vielzahl von Substraten und eine alternative Stromgewinnung durch das bekannte Prinzip der Thermoelektrizität. Bisher scheitert die Herstellung von flächendeckenden Gebilden aus solchen Stoffen an der Wirtschaftlichkeit. Niobate und Tantalate gelten als seltene Erden als zu teuer. So werden diese Werkstoffe bisher nur im Bereich der Thermosensorik eingesetzt.

Zum Untermauern der erhofften Effekte wurde in einem weiteren Versuch folgende nun Lackzusammensetzung (Tab. 19) auf eine 1 Quadratmeter große Rigipsplatte mit einer Schichtdicke von ca. 120µm +/- 10µm aufgetragen. Die Platte wurde 7 Tage unter Raumbedingung getrocknet und für weitere Versuche zur Verfügung gestellt.

**Tab. 19 (Lackzusammensetzung für Anti-Eis-Test)**

| **Rohstoffbezeichnung** | **Gewichtsprozent %** |
|---|---|
| Nyacol Al20 (von Nyacol) | 4 |
| Buthylgkykol | 2 |
| Wasser | 3 |
| Lopon 890 | 0,1 |
| Siliporite NK 10 AP | 1 |
| WorleeWSol 150 EW | 54 |
| Borchi Aqua Co 7 | 0,2 |
| Tego Airex TM 825 | 0,4 |
| Byk 346 | 0,3 |
| Byk Cloisite 116 | 5 |
| Südranol 199 | 1 |
| Byk 024 | 0,1 |
| Byk 4509 | 3 |
| Li_{0,21}Nb_{0,09}Ca_{0,30}B_{0,4}S_{1,70}F_{0,3} | 25 |
| Tafigel Pur 48 | 0,5 |
| Polypropylenglykol | 0,4 |
| gesamt | 100,0 |

Nach der Trocknung wurde die Platte an den Seiten mit einem Kupferleitlack etwa 1,5cm am rechten und linken Rand beschichtet. Nach weiterer Trocknung von 48h erfolgte nun eine Strombeaufschlagung der Platte über die Kupferoberfläche mit einem regelbaren Netzteil. Bei einer Spannung von 60V und 10 Ampere wurde die Oberflächentemperatur des Lackes von 19,8°C auf 69,2°C angehoben. Senkte man die Ausgangstemperatur auf unter -1,5°C ergab sich nach 5 min eine Endtemperatur von 20,1°C.

Neben der Realisierung von Anti-Eis-Beschichtungen erlaubt dieses Verfahren auch die hygienische Ausrüstung von Wandfarben in der Art, indem Bakterien und andere Krankheitserreger einfach periodisch ausführend thermisch abgetötet werden. So Beschreibt man einen physikalisch wirkenden Biozid-Mechanismus.

Für den wirtschaftlichen Vergleich zu bisherigen Chemikalien mit pyroelektrischen Effekt gilt:
Lithiumniobat kostet zurzeit auf den Weltmarkt etwa 1500-2000 EURO / kg. Für den oben beschrieben Effekt werden nun 15-25 Masse% zum Beispiel von Lithiumniobat im Lack benötigt. Dieses muss genauso zerkleinert werden wie die erfindungsmäßige Zusammensetzung, um einen optimalen Effekt zu zeigen. Der Mahlprozess in den kolloidalen Bereich mit ca. 4-6 Euro / kg wäre also in beiden Fällen gleich. Die getestete erfindungsmäßige Zusammensetzung liegt dagegen nur bei ca. 5%-12% der Rohstoffkosten, und der Prozess im Autoklaven mit ca. 10 Euro /kg fällt dann bei der Gesamt-Bilanz kaum noch ins Gewicht. Zu den bisher beschriebenen Versuchen wurde nun noch ein weiterer Ansatz durchdacht, ausgeführt und bewiesen. Dem Fachmann für Polymerchemie ist schon lange das Zugeben von kolloidalen Solen oder Pulvern zu der Gesamtformulierung von Lacken bekannt. Auf diese Weise werden oft Beschichtungen auf allerlei Substraten funktionalisiert. Auch ist dem Fachmann bekannt, dass diese Funktionalisierung in das Polymer (=Bindemittel für Lack und Farben) direkt bei der Polymerisation eingebaut werden kann. Dies wurde nun im Folgenden auch realisiert.

Zuerst stellte man als A-Komponente eine Monomerenmischung, bestehend aus 250 g Methylmethacrylat (MMA), 249,5 g n-Butylacrylat (n-BA) und 0,5 g Methacryloxypropyltrimethoxysilan (MEMO) sowie als B-Komponente eine Initiatorlösung, bestehend aus 4,5 g Natriumperoxodisulfat, 15,5 g einer 10 gewichtsprozentigen Lösung von Lithiumhydroxid und 100 g demineralisierten Wasser, her.

In einem 2 Liter-Vierhalskolben, ausgerüstet mit einem Rückflußkühler, einem Thermometer, einem mechanischem Rührer sowie einer Dosiervorrichtung, wurden bei 22°C (Raumtemperatur) und 1,1 bar (absolut) unter Argon-Atmosphäre und Rühren (200U/min) 300 g von Li_{0,21}Nb_{0,09}Ca_{0,30}B_{0,4}S_{1,70}F_{0,3} als 20% kolloidales Sol vorgelegt. Tropfenweise wurde nun ein Gemisch aus 5 g Methacrylsäure und 10 g einer 10 gewichtsprozentigen wässrigen Lösung von Lithiumhydroxid innerhalb von 10 Minuten zugegeben. Nun fügte man der gerührten Reaktionsmischung während der nächsten 15 Minuten 12 g einer 30 gewichtsprozentigen Luvitec K30-Lösung (BASF) zu. Dem Reaktionsgemisch gab man noch als kationischen Emulgator während 60 Minuten 1 g N,N-Distearyl-N,N-dimethylammoniumchlorid hinzu. Danach heizte man das Gemisch auf eine Reaktionstemperatur von 75° C auf.

Über die zwei separaten Zulaufleitungen des Reaktionsgefäßes wurden der so hergestellten Reaktionsmischung während 5 Minuten 30 g von Komponente A und 60 g von Komponente B zugegeben. Danach rührte man die Reaktionsmischung eine Stunde bei einer Reaktionstemperatur von 75°C +/- 2°C weiter. Anschließend fügte man dem Reaktionsgemisch 1 g einer 45 gewichtsprozentigen wässrigen Lösung von Dowfax® 2A1 zu und erhöhte die Reaktionstemperatur auf 82 °C. Innerhalb von 4 Stunden wurden nun zeitgleich beginnend die Reste von A und B dem Reaktionsgemisch kontinuierlich zu dosiert. Die Reaktionsmischung wurde anschließend auf Raumtemperatur heruntergekühlt und bei 200 U/min über Nacht unter leichter Zugabe von Argon weitergerührt.

In dem vorliegenden Bindemittel wurde, wie dem Fachmann bekannt ist, die erfindungsmäßige Zusammensetzung in die Polymerkette bei der Synthese mit eingebaut. Das Bindemittel wurde nun wie folgt noch geprüft.

Dem vorliegenden Bindemittel wurden 7% Buthylglykol zugegeben, sowie 0,5% Byk 346 als Benetzungsmittel, 0,5% Byk 093 als Entlüfter und 5 % Wasser. Diese Mischung wurde als alternative Beschichtungslösung auf die oben beschriebene Rigipsplatte gebracht. Der Temperaturversuch und das Anlegen des elektrischen Feldes wiederholt. Bei -1°C ergab sich nun innerhalb von 20 sec eine Erhöhung der Oberflächentemperatur auf 19,2°C.

Auf diese Weise konnte gezeigt werden, dass das Einpolymerisieren der erfindungsmäßigen Zusammensetzung in einem Syntheseprozess zur Herstellung eines Lackbindemittels erfolgen kann und so durchaus zu Bindemitteln mit neuen Eigenschaften führt.

## Patentansprüche

1. Halbleitendes Pulverförmig vorliegendes Kationborosulfid mit
a. der allgemeinen Formel R_{α}Z_{β}B_{1-α-β}S_{2-γ}X_{γ} ·BS₂, wobei
Z = Nebengruppenelement als Kation einschließlich der Lanthanide und der Actiniden;
R = anderes Hauptgruppenelement als Kation (ohne Halogene und Edelgase) oder beliebiges Gemisch derselben den mit molaren Verhältnissen von α+β < 0,95;
X=Halogenide mit γ < 0,8; B=Bor und S=Schwefel bedeutet, und
b. einer Wasserlöslichkeit von höchstens 2 g/l (bei 20°C), angegeben als freies Bor, und 10 g (bei 20°C), angegeben als freier Schwefel, und
c. einer Korngröße d90, bestimmt gemäß ISO 20998-1:2006, von weniger als 900 nm, und
d. einer Bordisulfid-Molekülstruktur, die dem des Porphyrin entspricht oder ähnelt, wobei das Pulver Haftvermittler ausgewählt aus der Gruppe der Silikate, Phosphate, Titanate, Aluminate, Phosphonate, Phosphazene, Zirkonate, Silane, Siloxane und Mischungen davon enthalten kann.

2. Halbleitendes Pulver nach Anspruch 1, **dadurch gekennzeichnet, dass** die Korngröße d90 des erfindungsgemäßen pulverförmig vorliegenden Kationborosulfid weniger als 900 nm und vorzugsweise weniger als 800 nm, insbesondere weniger als 750 nm, beispielsweise weniger als 700 nm, wie weniger als 650 nm, vorzugsweise weniger als 600 nm, insbesondere weniger als 550 nm, wie weniger als 500 nm oder weniger als 450 nm und vorzugsweise weniger als 400 nm, insbesondere weniger als 350 nm, beispielsweise weniger als 300 nm, wie weniger als 250 nm, vorzugsweise weniger als 200 nm, insbesondere weniger als 200 nm, wie weniger als 150 nm oder weniger als 100 nm, jeweils bestimmt gemäß ISO 20998-1:2006.

3. Halbleitendes Pulver nach Anspruch 1 oder 2, **dadurch gekennzeichnet, dass** die Wasserlöslichkeit höchstens 0,1 g/l Wasser beträgt (bei 20°C), bezogen auf freies Bor und 0,3 g/l Wasser beträgt (bei 20°C), bezogen auf freien Schwefel beträgt.

4. Halbleitendes Pulver nach einem der vorhergehenden Ansprüche, **dadurch gekennzeichnet, dass** wenigstens zwei der folgenden Eigenschaften gleichzeitig auftreten, welche da sind:
a. eine Photoelektrische/ Photokatalytische Wirksamkeit vergleichbar mit dem des nanoskaligen Titandioxid und seinen Dotierungsformen in seiner kristallinen Form des Anatas;
b. einen ausgeprägten NOx-Abbau-Mechanismus vergleichbar mit dem des nanoskaligen Titandioxid und seinen Dotierungsformen in seiner kristallinen Form des Anatas;
c. eine pyroelektrische (thermoelektrische) Eigenschaft vergleichbar mit dem der Alkali-Niobate und Alkali-Tantalate;
d. Stromerzeugende Eigenschaften vergleichbar mit dem der Alkali-Niobate, Alkali-Tantalate, Silizium und Perowskite;
e. eine ausgeprägte elektromagnetische Strahlung, die bei vielen halbleitenden Materialien bekannt sind;
f. Bakterizide Wirksamkeit vergleichbar mit dem der Alkali-Borate, der löslichen Bor-Oxide sowie der unlöslichen kolloidalen Kation-Borate;
g. Bakterizide Wirksamkeit vergleichbar mit dem der Elemente Bor und Schwefel;
h. einen elektrostatischen Abstoßungsmechanismus von Mikroorganismen;
i. komplexbildende Eigenschaften vergleichbar mit dem der Alkali-Borate, der löslichen Bor-Oxide sowie der unlöslichen kolloidalen Kation-Borate in Bezug auf Glykole, deren Derivate oder Glykol-Gruppen

5. Halbleitendes Pulver nach einem der vorhergehenden Ansprüche, **dadurch gekennzeichnet, dass** es mindestens 50 Gew.-% R_{α}Z_{β}B_{1-α-β}S_{2-γ}X_{γ} umfasst, vorzugsweise mindestens 60 Gew.-% K_{α}Z_{β}B_{1-α-β}S_{2-γ}X_{γ}, bevorzugter mindestens 65 Gew.-% K_{α}Z_{β}B_{1-α-β}S_{2-γ}X_{γ}, insbesondere mindestens 70 Gew.-% R_{α}Z_{β}B_{1-α-β}S_{2-γ}X_{γ}, wie mindestens 75 Gew.-% K_{α}Z_{β}B_{1-α-β}S_{2-γ}X_{γ}.

6. Halbleitendes Pulver nach einem der vorhergehenden Ansprüche, **dadurch gekennzeichnet, dass** es auf einem Kernmaterial aufgebracht und vorliegen kann.

7. Halbleitendes Pulver nach Anspruch 6 , **dadurch gekennzeichnet, dass** das Kernmaterial ein natürliches oder synthetisches Mineral, Mineralgemisch, Gesteinsmehl von amorpher bis kristalliner Struktur sein kann; dass es ein natürliches oder synthetisches organisch basiertes Pulver sein kann; dass es ein natürliches oder synthetisches von amorpher bis kristalliner Struktur Metallpulver bzw. Metalllegierungspulver oder Metallsalz sein kann; dass es ein Keramik-, Glas-, Beton-oder Betonersatzpulver sein kann; oder dass es beliebige Mischungen der vorherig genannten Pulver sein kann.

8. Halbleitendes Pulver nach Anspruch 6 und 7, **dadurch gekennzeichnet, dass** die Gesamtkorngröße des beschichteten Kernmaterials gemäß ISO 20998-1:2006 in einem Korngrößenbereich von 1-2800 nm liegt, vorzugsweise jedoch im Bereich von 10-2500 nm und besonders im Bereich von 50-2000 nm.

9. Halbleitendes Pulver nach den Ansprüchen 1 und 5, **dadurch gekennzeichnet, dass** es mit einem Haftvermittler versehen ist, vorzugsweise mit einem Aluminat und im besonderen Fall mit einem Lithiumaluminat.

10. Ein Verfahren zur Herstellung des pulverförmig vorliegenden Kationborosulfid gemäß einem der vorhergehenden Ansprüche, **dadurch gekennzeichnet, dass** in einem ersten Schritt eine Fällungsreaktion durchgeführt wird, eine Autoklaven-Behandlung oder sonstige Thermische Behandlung zur Stabilisierung anschließt, das entstandene Kationborosulfid in Anwesenheit des Haftvermittlers auf gewünschte Zielgröße falls noch nicht gegeben dann vermahlen wird, das Mahlprodukt nun einer Trocknung (vorzugsweise Sprüh- oder einem Gefriertrocknen) unterworfen wird, um das pulverförmig vorliegende Kationborosulfid zu erhalten.

11. Eine Suspension oder kolloidale Lösung, die unter Anspruch 10 bereits vor dem Trocknen vorliegende Suspension oder kolloidale Lösung, oder ein Suspensions- oder Lösemittel und das erfindungsmäßige pulverförmig getrocknet vorliegende Kationborosulfid gemäß einem der Ansprüche 1 bis 9.

12. Eine Suspension oder kolloidale Lösung nach Anspruch 11, **dadurch gekennzeichnet, dass** das Suspensionsmittel ein oder mehrere Lösemittel ausgewählt aus Wasser, Solen, Glykolen und Kohlenwasserstoffe umfasst, wobei das Suspensionsmittel vorzugsweise ein oder mehrere Lösemittel, ausgewählt aus Wasser, Naphtha und Ethylenglykol, umfasst.

13. Die Verwendung des halbleitenden Pulvers gemäß einem der Ansprüche 1 bis 9, oder der Suspension, oder der kolloidalen Lösung gemäß Anspruch 11 oder 12, **dadurch gekennzeichnet, dass** in Werkstoffen und Beschichtungen jeglicher Art die halbleitenden Eigenschaften, vorzugsweise die der pyroelektrischen Wirkung genutzt wird zum Beispiel in Form der Stromerzeugung, z.B. als großflächig angelegter Thermogenerator durch die Nutzung von Temperaturgradienten; in Form einer Solarzelle unter Ausnutzung einer breiteren Bandbreite des natürlichen Lichtspektrums; in Form der Stromspeicherung als Elektrolyt und Elektrodenmaterial in Sekundärbatterien; In Form der Temperatursteuerung und Temperaturmessung von Bauteilen wie Thermosensoren, Thermo- oder Pelitierelementen; in Form einer Anti-Eis-Wirkung als Beschichtung auf jeglichen Substraten oder als Voll-Bauteil.

14. Die Verwendung des halbleitenden Pulvers gemäß einem der Ansprüche 1 bis 9, oder der Suspension, oder der kolloidalen Lösung gemäß Anspruch 11 oder 12, **dadurch gekennzeichnet, dass** in Werkstoffen und Beschichtungen jeglicher Art die halbleitenden Eigenschaften, vorzugsweise die der photokatalytischen Eigenschaft genutzt wird, zum Beispiel in Form von Beschichtungen zur Selbstreinigung als bakterizider und algizider Ersatzstoff auf jeglichen Substraten und Untergründen, in Form von Anti-Eis Beschichtungen, welche die Kombination von Hydrophobie und Hydrophilie gleichzeitig nutzt; in Form von Katalysatoren jeglicher Werkstoffart und Bauform zum Abbau von NOx-Gasen, in Form einer Grätzelzelle zur Energiegewinnung.

15. Die Verwendung des halbleitenden Pulvers gemäß einem der Ansprüche 1 bis 9, oder der Suspension, oder der kolloidalen Lösung gemäß Anspruch 11 oder 12, **dadurch gekennzeichnet, dass** die komplexbildende Wirkung von Lipiden, insbesondere der der Glykolipide genutzt wird, insbesondere zur Entwicklung von Antibiotika gegen resistente Superbakterien.

16. Die Verwendung des halbleitenden Pulvers gemäß einem der Ansprüche 1 bis 9, oder der Suspension oder der kolloidalen Lösung gemäß Anspruch 11 oder 12, **dadurch gekennzeichnet, dass** es in Werkstoffen und Beschichtungen aller Art zur elektromagnetischen Abschirmung sowie als Neutronenabsorbermaterial, zur Abschirmung radioaktiver und elektromagnetischer Strahlung genutzt wird.

17. Die Verwendung des halbleitenden Pulvers gemäß einem der Ansprüche 1 bis 9, oder der Suspension, oder der kolloidalen Lösung gemäß Anspruch 11 oder 12, **dadurch gekennzeichnet, dass** es als biozider Ersatzstoff dort eingesetzt wird wo eine fungizide, bakterizide und insektizide Ausrüstung wie von organischen oder anorganischen Bindemitteln, Lackhalberzeugnissen, Holzschutz und Konservierungsmittel, ligninhaltigen synthetischen oder natürlichen Materialien wie Holz und Papier, Chitin, Seide, Leder, Baumwolle, Leimen, Klebern, Kunststoffen, Polymerkompositen aller Art, Kohlenstoff-basierten Bauteilen, Beton, Betonersatzstoffen, Teer- und Asphaltmischungen, anorganischen oder hybridbasierenden Beschichtungsstoffen jeglicher Art, Textilien, Gewebe, Glas, Keramik, Glaskeramik, Metallen oder Metall- oder Salzschmelzen oder insbesondere die Ausrüstung als alternatives Holzschutzmittel erforderlich ist und wird.

18. Die Verwendung des halbleitenden Pulvers gemäß dem Anspruch einem der Ansprüche 18, **dadurch gekennzeichnet, dass** der biozide Ersatz-Wirkmechanismus multifunktional aufgebaut ist und welcher im einzeln umfasst, die physiologischen Wirkung von Schwefel an der Kristalloberfläche; die photokatalytischen Effekte und damit die Erzeugung von Sauerstoffradikalen und Hydroxiden an den Kristallgrenzen; die komplexbildende Wirkung von unlöslichen Bor und unlöslichen Boraten an den Kristallgrenzen; die physiologische Wirkung von Bor; die statische Abstoßung von Fremdkörpern (=Keime) an den Kristallgrenzen durch die Elektronenverschiebung als Bestandteil des pyroelektrischen Effektes.

19. Die Verwendung des halbleitenden Pulvers gemäß dem Anspruch einem der Ansprüche 18, **dadurch gekennzeichnet, dass** in Werkstoffen und Beschichtungen aller Art das Anlegen einer äußeren Spannung zu einer Temperaturerhöhung führt und somit zu lebensfeindlichen Bedingungen führt.

20. Die Verwendung des halbleitenden Pulvers gemäß einem der Ansprüche 1 bis 9, oder der Suspension, oder der kolloidalen Lösung gemäß Anspruch 11 oder 12, **dadurch gekennzeichnet, dass** es als insektizider Ersatzstoff, dort eingesetzt wird wo ein Schutz gegen Insekten, vorzugsweise gegen staatenbildende Insekten benötigt wird und auf der Eigenschaft der elektromagnetischen Eigenstrahlung-Strahlung beruht, welche die Kommunikation der Tiere stört.

21. Die Verwendung des halbleitenden Pulvers gemäß einem der Ansprüche 1 bis 9, oder der Suspension, oder der kolloidalen Lösung gemäß Anspruch 11 oder 12, **dadurch gekennzeichnet, dass** es als Pflanzenschutzmittel, als Alternative Arznei, als Pflanzendünger, als Tierfutter, als Schmierstoff, als Reinigungsmittel, als Brennstoff, als Elektrischer Leiter, als Magnetmaterial, als Wärmespeichermaterial, als Pigment, als Brandschutzadditiv, als UV-Schutz-Additiv, als Filtermaterial, als Membran funktionalisierender Füllstoff, als Supraleiter, als Hydrophobie- oder Hydrophilie-Additiv eingesetzt wird.

22. Die Verwendung des halbleitenden Pulvers gemäß einem der Ansprüche 1 bis 9, oder der Suspension oder der kolloidalen Lösung gemäß Anspruch 11 oder 12, **dadurch gekennzeichnet, dass** es zur Herstellung anorganischer und organischer Polymere in den industriellen Polymerisations-Prozess in der Art mit einbezogen wird, dass es Bestandteil der Polymerisation ist und/ oder Teil eines Prepolymers ist.

23. Die Verwendung des halbleitenden Pulvers gemäß einem der Ansprüche 1 bis 9, oder der Suspension oder der kolloidalen Lösung gemäß Anspruch 11 oder 12, **dadurch gekennzeichnet, dass** es in die Herstellung und Modifikation von natürlichen oder synthetischen Mineralien oder Mineralienmischungen geht, vorzugsweise zur Erzeugung und Verwendung sogenannter Pillard-Clays.

24. Die Verwendung des halbleitenden Pulvers gemäß einem der Ansprüche 1 bis 9, oder der Suspension, oder der kolloidalen Lösung gemäß Anspruch 11 oder 12, **dadurch gekennzeichnet, dass** es als werkstoffspezifischer Verfestiger dient, vorzugsweise als Verfestiger von Beton, Betonersatzstoffen und Sandstein.

25. Die Verwendung des halbleitenden Pulvers gemäß einem der Ansprüche 1 bis 9, oder der Suspension, oder der kolloidalen Lösung gemäß Anspruch 11 oder 12, **dadurch gekennzeichnet, dass** es gemäß den Ansprüchen 13 bis 25 in jeglicher Menge mit allen anderen herkömmlichen Mitteln und Materialien in beliebigen Mengen kombiniert werden kann.
